(19) Europäisches Patentamt
European Patent Office
Office européen des brevets

(11) **EP 1 502 255 B1**

(12) **EUROPÄISCHE PATENTSCHRIFT**

(45) Veröffentlichungstag und Bekanntmachung des Hinweises auf die Patenterteilung:
**19.11.2014 Patentblatt 2014/47**

(21) Anmeldenummer: **03790855.5**

(22) Anmeldetag: **04.08.2003**

(51) Int Cl.:
*G10L 19/02* *(2013.01)*

(86) Internationale Anmeldenummer:
**PCT/EP2003/008623**

(87) Internationale Veröffentlichungsnummer:
**WO 2004/021710 (11.03.2004 Gazette 2004/11)**

(54) **VORRICHTUNG UND VERFAHREN ZUM SKALIERBAREN CODIEREN UND VORRICHTUNG UND VERFAHREN ZUM SKALIERBAREN DECODIEREN EINES AUDIOSIGNALES**

DEVICE AND METHOD FOR SCALABLE CODING AND DEVICE AND METHOD FOR SCALABLE DECODING

DISPOSITIF ET PROCEDE DE CODAGE ECHELONNABLE ET DISPOSITIF ET PROCEDE DE DECODAGE ECHELONNABLE

(84) Benannte Vertragsstaaten:
**AT CH DE FR GB LI NL**

(30) Priorität: **09.08.2002 DE 10236694**

(43) Veröffentlichungstag der Anmeldung:
**02.02.2005 Patentblatt 2005/05**

(73) Patentinhaber: **Fraunhofer-Gesellschaft zur Förderung der angewandten Forschung e.V.
80686 München (DE)**

(72) Erfinder:
- **GEIGER, Ralf
  98693 Ilmenau (DE)**
- **SPORER, Thomas
  90766 Fürth (DE)**
- **BRANDENBURG, Karlheinz
  91054 Erlangen (DE)**
- **HERRE, Jürgen
  91054 Buckenhof (DE)**
- **KOLLER, Jürgen
  81369 München (DE)**
- **SCHULLER, Gerald
  99089 Erfurt (DE)**

(74) Vertreter: **Zimmermann, Tankred Klaus et al
Schoppe, Zimmermann
Stöckeler & Zinkler & Partner
Patentanwälte
Postfach 246
82043 Pullach bei München (DE)**

(56) Entgegenhaltungen:
**US-A- 6 108 625**

- **WEN JIN ET AL: "A scalable subband audio coding scheme for ATM environments" PROCEEDINGS IEEE SOUTHEASTCON 2001. ENGINEERING THE FUTURE. CLEMSON, SC, MARCH 30 - APRIL 1, 2001, IEEE SOUTHEASTCON, NEW YORK, NY: IEEE, US, 30. März 2001 (2001-03-30), Seiten 271-275, XP010542621 ISBN: 0-7803-6748-0**
- **PARK S-H ET AL: "MULTI-LAYER BIT-SLICED BIT-RATE SCALABLE AUDIO CODING" PREPRINTS OF PAPERS PRESENTED AT THE AES CONVENTION, XX, XX, Bd. 103, Seite 16 XP009016481 in der Anmeldung erwähnt**
- **GEIGER R ET AL: "IntMDCT - a link between perceptual and lossless audio coding" 2002 IEEE INTERNATIONAL CONFERENCE ON ACOUSTICS, SPEECH, AND SIGNAL PROCESSING. PROCEEDINGS (CAT. NO. 02CH37334), PROCEEDINGS OF INTERNATIONAL CONFERENCE ON ACOUSTICS, SPEECH AND SIGNAL PROCESSING (CASSP'02), ORLANDO, FL, USA, 13-17 MAY 2002, Seiten II-1813-16 vol.2, XP002270626 2002, Piscataway, NJ, USA, IEEE, USA ISBN: 0-7803-7402-9**

- **GEIGER R ET AL: "Fine grain scalable perceptual and lossless audio coding based on IntMDCT" 2003 IEEE INTERNATIONAL CONFERENCE ON ACOUSTICS, SPEECH, AND SIGNAL PROCESSING (CAT. NO.03CH37404), PROCEEDINGS OF INTERNATIONAL CONFERENCE ON ACOUSTICS, SPEECH AND SIGNAL PROCESSING (ICASSP'03), HONG KONG, CHINA, 6-10 APRIL 2003, Seiten V-445-8 vol.5, XP010639304 2003, Piscataway, NJ, USA, IEEE, USA ISBN: 0-7803-7663-3**

**Beschreibung**

Die vorliegende Erfindung bezieht sich auf Audio- und/oder Videocodierer/Decodierer und insbesondere auf Codierer-/Decodierereinrichtungen, die eine Skalierbarkeit aufweisen.

Moderne Audiocodierverfahren, wie z. B. MPEG Layer3 (MP3) oder MPEG AAC verwenden Transformationen wie beispielsweise die sogenannte modifizierte diskrete Cosinustransformation (MDCT), um eine blockweise Frequenzdarstellung eines Audiosignals zu erhalten. Ein solcher Audiocodierer erhält üblicherweise einen Strom von zeitdiskreten Audio-Abtastwerten. Der Strom von Audio-Abtastwerten wird gefenstert, um einen gefensterten Block von beispielsweise 1024 oder 2048 gefensterten Audio-Abtastwerten zu erhalten. Zur Fensterung werden verschiedene Fensterfunktionen eingesetzt, wie z. B. ein Sinus-Fenster, etc.

Die gefensterten zeitdiskreten Audio-Abtastwerte werden dann mittels einer Filterbank in eine spektrale Darstellung umgesetzt. Prinzipiell kann hierzu eine Fourier-Transformation, oder aus speziellen Gründen eine Abart der Fourier-Transformation, wie z. B. eine FFT oder, wie es ausgeführt worden ist, eine MDCT eingesetzt werden. Der Block von Audio-Spektralwerten am Ausgang der Filterbank kann dann je nach Bedarf weiter verarbeitet werden. Bei den oben bezeichneten Audio-Codierern folgt eine Quantisierung der Audio-Spektralwerte, wobei die Quantisierungsstufen typischerweise so gewählt werden, daß das durch das Quantisieren eingeführt Quantisierungsrauschen unterhalb der psychoakustischen Maskierungsschwelle liegt, d. h. "wegmaskiert" wird. Die Quantisierung ist eine verlustbehaftete Codierung. Um eine weitere Datenmengenreduktion zu erhalten, werden die quantisierten Spektralwerte anschließend beispielsweise mittels einer Huffman-Codierung Entropie-codiert. Durch Hinzufügen von Seiteninformationen, wie z. B. Skalenfaktoren etc. wird aus den Entropie-codierten quantisierten Spektralwerten mittels eines Bitstrom-Multiplexers ein Bitstrom gebildet, der gespeichert oder übertragen werden kann.

Im Audio-Decodierer wird der Bitstrom mittels eines Bitstrom-Demultiplexers in codierte quantisierte Spektral-werte und Seiteninformationen aufgeteilt. Die Entropie-codierten quantisierten Spektralwerte werden zunächst Entropie-decodiert, um die quantisierten Spektralwerte zu erhalten. Die quantisierten Spektralwerte werden dann invers quantisiert, um decodierte Spektralwerte zu erhalten, die Quantisierungsrauschen aufweisen, das jedoch unterhalb der psychoakustischen Maskierungsschwelle liegt und daher unhörbar sein wird. Diese Spektralwerte werden dann mittels eines Synthese-Filterbank in eine zeitliche Darstellung umgesetzt, um zeitdiskrete decodierte Audio-Abtastwerte zu erhalten. In der Synthese-Filterbank muß ein zum Transformations-Algorithmus inverser Transformations-Algorithmus eingesetzt werden. Außerdem muß nach der Frequenz-Zeit-Rücktransformation das Fenstern rückgängig gemacht werden.

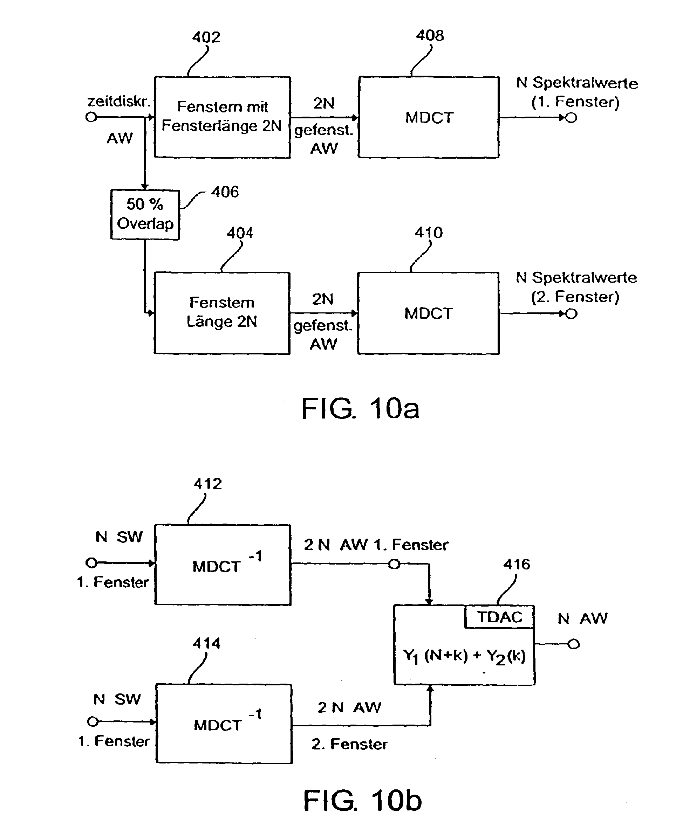

Um eine gute Frequenzselektivität zu erreichen, verwenden moderne Audio-Codierer typischerweise eine Block-Überlappung. Ein solcher Fall ist in Fig. 10a dargestellt. Zunächst werden beispielsweise 2048 zeitdiskrete Audio-Abtastwerte genommen und mittels einer Einrichtung 402 gefenstert. Das Fenster, das die Einrichtung 402 verkörpert, hat eine Fensterlänge von 2N Abtastwerten und liefert ausgangsseitig einen Block von 2N gefensterten Abtastwerten. Um eine Fensterüberlappung zu erreichen, wird mittels einer Einrichtung 404, die lediglich aus Übersichtlichkeitsgründen in Fig. 10a getrennt von der Einrichtung 402 dargestellt ist, ein zweiter Block von 2N gefensterten Abtastwerten gebildet. Die in die Einrichtung 404 eingespeisten 2048 Abtastwerte sind jedoch nicht die an das erste Fenster unmittelbar anschließenden zeitdiskreten Audio-Abtastwerte, sondern beinhalten die zweite Hälfte der durch die Einrichtung 402 gefensterten Abtastwerte und beinhalten zusätzlich lediglich 1024 "neue" Abtastwerte. Die Überlappung ist durch eine Einrichtung 406 in Fig. 10a symbolisch dargestellt, die einen Überlappungsgrad von 50% bewirkt. Sowohl die durch die Einrichtung 402 ausgegebenen 2N gefensterten Abtastwerte als auch die durch die Einrichtung 404 ausgegebenen 2N gefensterten Abtastwerte werden dann mittels einer Einrichtung 408 bzw. 410 dem MDCT-Algorithmus unterzogen. Die Einrichtung 408 liefert gemäß dem bekannten MDCT-Algorithmus N Spektralwerte für das erste Fenster, während die Einrichtung 410 ebenfalls N Spektralwerte liefert, jedoch für das zweite Fenster, wobei zwischen dem ersten Fenster und dem zweiten Fenster eine Überlappung von 50% besteht.

Im Decodierer werden die N Spektralwerte des ersten Fensters, wie es in Fig. 10b gezeigt ist, einer Einrichtung 412, die eine inverse modifizierte diskrete Cosinustransformation durchführt, zugeführt. Dasselbe gilt für die N Spektralwerte des zweiten Fensters. Diese werden einer Einrichtung 414 zugeführt, die ebenfalls eine inverse modifizierte diskrete Cosinustransformation durchführt. Sowohl die Einrichtung 412 als auch die Einrichtung 414 liefern jeweils 2N Abtastwerte für das erste Fenster bzw. 2N Abtastwerte für das zweite Fenster.

In einer Einrichtung 416, die in Fig. 10b mit TDAC (TDAC = Time Domain Aliasing Cancellation) bezeichnet ist, wird die Tatsache berücksichtigt, daß die beiden Fenster überlappend sind. Insbesondere wird ein Abtastwert $y_1$ der zweiten Hälfte des ersten Fensters, also mit einem Index N+k, mit einem Abtastwert $y_2$ aus der ersten Hälfte des zweiten Fensters, also mit einem Index k summiert, so daß sich ausgangsseitig, also im Decodierer, N decodierte zeitliche Abtastwerte ergeben.

Es sei darauf hingewiesen, daß durch die Funktion der Einrichtung 416, die auch als Add-Funktion bezeichnet wird, die in dem durch Fig. 10a schematisch dargestellten Codierer durchgeführte Fensterung gewissermaßen automatisch berücksichtigt wird, so daß in dem durch Fig. 10b dargestellten Decodierer keine explizite "inverse Fensterung" stattzufinden hat.

Wenn die durch die Einrichtung 402 oder 404 implementierte Fensterfunktion mit w(k) bezeichnet wird, wobei der Index k den Zeitindex darstellt, bezeichnet wird, so muß die Bedingung erfüllt sein, daß das Fenstergewicht w(k) im Quadrat addiert zu dem Fenstergewicht w(N+k) im Quadrat zusammen 1 ergibt, wobei k von 0 bis N-1 läuft. Wenn ein Sinus-Fenster verwendet wird, dessen Fenster-Gewichtungen der ersten Halbwelle der Sinus-Funktion folgen, so ist diese Bedingung immer erfüllt, da das Quadrat des Sinus und das Quadrat des Cosinus für jeden Winkel zusammen den Wert 1 ergeben.

Nachteilig an dem in Fig. 10a beschriebenen Fenster-Verfahren mit anschließender MDCT-Funktion ist die Tatsache, daß die Fensterung durch Multiplikation eines zeitdiskreten Abtastwerts, wenn an ein Sinus-Fenster gedacht wird, mit einer Gleitkommazahl erreicht wird, da der Sinus eines Winkels zwischen 0 und 180 Grad abgesehen von dem Winkel 90 Grad keine Ganzzahl ergibt. Auch wenn ganzzahlige zeitdiskrete Abtastwerte gefenstert werden, entstehen nach dem Fenstern also Gleitkommazahlen.

Daher ist, auch wenn kein psychoakustischer Codierer verwendet wird, d. h. wenn eine verlustlose Codierung erreicht werden soll, am Ausgang der Einrichtungen 408 bzw. 410 eine Quantisierung notwendig, um eine einigermaßen überschaubare Entropie-Codierung durchführen zu können.

Wenn also bekannte Transformationen, wie sie anhand von Fig. 10a betrieben worden sind, für ein verlustloses Audiocodieren eingesetzt werden soll, muß entweder eine sehr feine Quantisierung eingesetzt werden, um den resultierenden Fehler aufgrund der Rundung der Gleitkommazahlen vernachlässigen zu können, oder das Fehlersignal muß zusätzlich beispielsweise im Zeitbereich codiert werden.

Konzepte der ersteren Art, also bei denen die Quantisierung so fein eingestellt, daß der resultierende Fehler aufgrund der Rundung der Gleitkommazahlen vernachlässigbar ist, sind beispielsweise in der deutschen Patentschrift DE 197 42 201 C1 offenbart. Hier wird ein Audiosignal in seine spektrale Darstellung überführt und quantisiert, um quantisierte Spektralwerte zu erhalten. Die quantisierten Spektralwerte werden wieder invers quantisiert, in den Zeitbereich überführt und mit dem ursprünglichen Audiosignal verglichen. Liegt der Fehler, also der Fehler zwischen dem ursprünglichen Audiosignal und dem quantisierten/invers quantisierten Audiosignal, oberhalb einer Fehlerschwelle, so wird der Quantisierer rückkopplungsmäßig feiner eingestellt, und der Vergleich wird erneut durchgeführt. Die Iteration ist beendet, wenn die Fehlerschwelle unterschritten wird. Das dann noch möglicherweise vorhandene Restsignal wird mit einem Zeitbereichscodierer codiert und in einen Bitstrom geschrieben, der neben dem Zeitbereichs-codierten Restsignal auch codierte Spektralwerte umfaßt, die gemäß den Quantisierereinstellungen quantisiert worden sind, die zum Zeitpunkt des Abbruchs der Iteration vorhanden waren. Es sei darauf hingewiesen, daß der verwendete Quantisierer nicht von einem psychoakustischen Modell gesteuert werden muß, so daß die codierten Spektralwerte typischerweise genauer quantisiert sind, als dies aufgrund des psychoakustischen Modells sein müßte.

In der Fachveröffentlichung "A Design of Lossy and Lossless Scalable Audio Coding", T. Moriya u.a., Proc. ICASSP, 2000, ist ein skalierbarer Codierer beschrieben, der als erstes verlustbehaftetes Datenkompressionsmodul z. B. einen MPEG-Codierer umfaßt, der eine blockweise digitale Signalform als Eingangssignal hat und den komprimierten Bitstrom erzeugt. In einem ebenfalls vorhandenen lokalen Decodierer wird die Codierung wieder rückgängig gemacht, und es wird ein codiertes/decodiertes Signal erzeugt. Dieses Signal wird mit dem ursprünglichen Eingangssignal verglichen, indem das codierte/decodierte Signal von dem ursprünglichen Eingangssignal subtrahiert wird. Das Fehlersignal wird dann in ein zweites Modul eingespeist, wo eine verlustlose Bitkonversion verwendet wird. Diese Konversion hat zwei Schritte. Der erste Schritt besteht in einer Konversion von einem Zweierkomplementformat in ein Vorzeichen-Betrag-Format. Der zweite Schritt besteht in der Umwandlung von einer vertikalen Betragssequenz in eine horizontale Bitsequenz in einem Verarbeitungsblock. Die verlustlose Datenumwandlung wird ausgeführt, um die Anzahl von Nullen zu maximieren oder die Anzahl von aufeinanderfolgenden Nullen in einer Sequenz zu maximieren, um eine möglichst gute Komprimierung des zeitlichen Fehlersignals, das als Folge von digitalen Zahlen vorliegt, zu erreichen. Dieses Prinzip basiert auf einem Bit-Slice-Arithmetic-Coding- (BSAC-) Schema, das in der Fachveröffentlichung "Multi-Layer Bit Sliced Bit Rate Scalable Audio Coder", 103. AES-Convention, Preprint Nr. 4520, 1997, dargestellt ist.

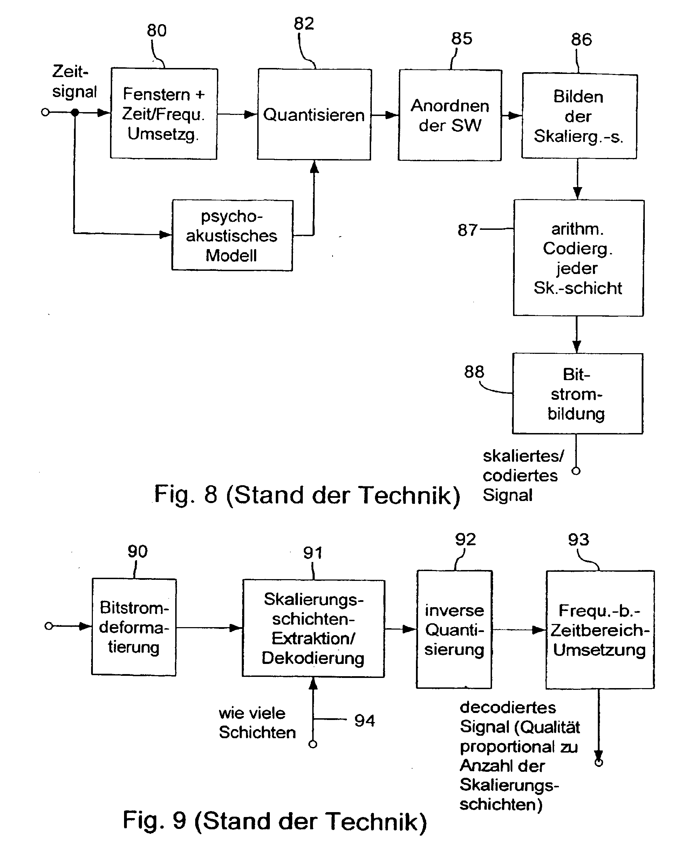

Die oben bezeichnete BSAC-Veröffentlichung offenbart in etwa einen Codierer, wie er in Fig. 8 dargestellt ist. Ein Zeitsignal wird in einen Block 80 eingespeist, der mit "Fenstern" und Zeit-/Frequenzumsetzung bezeichnet ist. Typischerweise wird im Block 80 eine MDCT (MDCT = modifizierte diskrete Kosinustransformation) verwendet. Hierauf werden die von dem Block 80 erzeugten MDCT-Spektralwerte in einem Block 82 quantisiert, um quantisierte Spektralwerte in binärer Form zu erhalten. Die Quantisierung durch den Block 82 wird durch eine Einrichtung 84 gesteuert, die unter Verwendung eines psychoakustischen Modells eine Maskierungsschwelle berechnet, wobei die Quantisierung in dem Block 82 derart durchgeführt wird, daß das Quantisierungsrauschen unterhalb der psychoakustischen Maskierungsschwel-le bleibt. In einem Block 85 werden die quantisierten Spektralwerte dann bitweise angeordnet, derart, daß die Bits gleicher Ordnung der quantisierten Spektralwerte in einer Spalte sind. In einem Block 86 werden dann Skalierungsschichten gebildet, wobei eine Skalierungsschicht einer Spalte entspricht. Eine Skalierungsschicht umfaßt daher die Bits gleicher Ordnung sämtlicher quantisierten Spektralwerte. Daran anschließend wird jede Skalierungsschicht nacheinander einer arithmetischen Codierung unterzogen (Block 87), wobei die von dem Block 87 ausgegebenen Skalierungsschichten in ihrer redundant codierten Form einer Bitstrombildungseinrichtung 88 zugeführt werden, welche ausgangs-seitig das skalierte/codierte Signal liefert, das neben den einzelnen Skalierungsschichten auch noch Seiteninformationen umfassen wird, wie es bekannt ist.

Allgemein gesagt wird der bekannte skalierbare BSAC-Codierer die Bits höchster Ordnung aller nach psychoakustischen Gesichtspunkten quantisierten Spektralwerten nehmen, einer arithmetischen Codierung unterziehen und dann als erste Skalierungsschicht in den Bitstrom schreiben. Da typischerweise sehr wenige sehr große Spektralwerte vorhanden sein werden, haben auch sehr wenige quantisierte Spektralwerte ein Bit höchster Ordnung gleich "1".

Zur Erzeugung der zweiten Skalierungsschicht werden nunmehr die Bits zweithöchster Ordnung aller Spektralwerte genommen, einer arithmetischen Codierung unterzogen und dann in den Bitstrom als zweite Skalierungsschicht geschrieben. Diese Prozedere wird solange wiederholt, bis die Bits der geringsten Ordnung aller quantisierten Spektralwerte arithmetisch codiert und als letzte Skalierungsschicht in den Bitstrom geschrieben worden sind.

Fig. 9 zeigt einen skalierbaren Decodierer zum Decodieren von durch den in Fig. 8 gezeigten skalierbaren Codierer erzeugten skalierten/codierten Signalen. Der skalierbare Decodierer umfaßt zunächst eine Bitstromdeformatierungseinrichtung 90, eine Skalierungsschichtextraktionseinrichtung/Decodierungseinrichtung 91, eine inverse Quantisierungseinrichtung 92 sowie schließlich eine Frequenzbereich/ Zeitbereichumsetzungseinrichtung 93, um ein decodiertes Signal zu erhalten, dessen Qualität proportional zu der Anzahl der von der Einrichtung 91 ausgewählten Anzahl von Skalierungsschichten abhängt.

Im einzelnen wird die Bitstromdeformatierungseinrichtung den Bitstrom aufpacken und neben den Seiteninformationen die verschiedenen Skalierungsschichten bereitstellen. Die Einrichtung 91 wird dann zunächst die erste Skalierungsschicht arithmetisch decodieren und abspeichern. Dann wird die zweite Skalierungsschicht arithmetisch decodiert und abgespeichert. Dieses Prozedere wird solange wiederholt, bis entweder alle im skalierten/codierten Signal enthaltenen Skalierungsschichten arithmetisch decodiert und abgespeichert worden sind, bzw. wird solange wiederholt, bis die über einen Steuereingang 94 geforderte Anzahl von Skalierungsschichten decodiert und abgespeichert worden sind. Damit werden sukzessive die Binärmuster für jede einzelne quantisierte Spektrallinie erzeugt, wobei diese in Binärform dargestellten quantisierten Spektralwerte unter Berücksichtigung eines Skalenfaktors etc. der inversen Quantisierung 92 unterzogen werden können, um dann invers quantisierte Spektralwerte zu erhalten, die durch die Einrichtung 93 in den Zeitbereich umgesetzt werden müssen, um das decodierte Signal zu erhalten.

Bei der Decodierung wird somit mit jeder Skalierungsschicht ein Bit für jeden Spektral wert gewonnen. Die z. B. nach einer Decodierung von fünf Skalierungsschichten verfügbaren Bits für jede Spektrallinie sind die obersten fünf Bits. Es sei darauf hingewiesen, daß bei sehr kleinen Spektralwerten, deren höchstwertiges Bit erst z. B. an fünfter Stelle kommt, durch die Decodierung von fünf Skalierungsschichten erst das MSB (MSB = most significant bit) dieser Spektrallinie vorliegt, wobei zur genaueren Darstellung dieser Spektrallinie noch weitere Skalierungsschichten verarbeitet werden müssen.

Die binäre Darstellung von Spektralwerten bringt es mit sich, daß - die MDCT-Spektralwerte beispielsweise sind Amplitudenwerte - jedes zusätzliche Bit einen Genauigkeitsgewinn für die Spektrallinie von 6 dB bedeutet.

Durch jede zusätzliche Skalierungsschicht ergibt sich somit eine Erhöhung der Genauigkeit aller Spektralwerte um 6 dB.

Beachtet man nun, daß zumindest bei rauschartigen Signalen die Mithörschwelle nur etwa 6 dB unterhalb des Signals liegt, so ergibt sich, daß eine bitweise Skalierung, wie sie durch das bekannte Codier-/Decodierkon zept geliefert wird, insbesondere für eine effiziente Codierung der gerade noch hörbaren Signalanteile, also beispielsweise für die unteren Bits der nach psychoakustischen Gesichtspunkten quantisierten Spektralwerte in der Genauigkeit problematisch ist.

Wird beispielsweise aufgrund eines Übertragungskanalengpasses die unterste Skalierungsschicht des durch den Block 88 von Fig. 8 ausgegebenen skalierten/codierten Signals nicht übertragen, so wird dies Genauigkeitsverluste von 6 dB zur Folge haben, was bei ungünstiger Konstellation zu deutlich hörbaren Störungen im decodierten Signal führen wird.

Die Fachveröffentlichung "A scalable subband audio coding scheme for ATM environments", W. Jin u.a., IEEE, 2001, 30. März 2001 - 1. April 2001, Proceedings IEEE Southeastcon 2001, Engineering The Future, Clemson, SC, XP010542621" offenbart einen skalierbaren Audiocodierer zum Beibehalten eines ununterbrochenen Dienstes in dynamisch sich verändernden ATM Netzumgebungen. Hierzu wird ein skalierbarer Bitstrom erzeugt, der aus fünf eingebetteten Schichten besteht, die die MDCT-Koeffizienten in einer Core-Schicht und vier aufeinanderfolgenden Verbesserungsschichten progressiv quantisiert aufweisen. Jede Schicht ist ein Teilsatz des gesamten Bitstroms und kann unabhängig decodiert werden. Um eine maximale Qualität mit minimaler Anzahl von Bits zu erhalten, wurde den niedrigen Frequenzen in der Quantisierungs- und Codierprozedur die höchste Priorität gegeben. Die Quantisierung und Huffman-Codierung wurde auf der Basis einer Bark-Frequenzskala durchgeführt, d.h. Transformationskoeffizienten werden in Frequenz-Bins der kritischen Bandbreite aufgeteilt, und ein proportionaler Teil der gesamten verfügbaren Bits wird jedem Bin zur Codierung zugeordnet. Das Verhalten wurde dahin gehend optimiert, dass höhere Schichten eine flexible Bandabdeckung haben, während die niedrigste Schicht immer tiefe Frequenzen umfasst.

Die Aufgabe der vorliegenden Erfindung besteht darin, ein Konzept zum skalierbaren Codieren/Decodieren zu schaffen, durch das eine feinere Skalierbarkeit erreichbar ist.

Diese Aufgabe wird durch eine Vorrichtung zum skalierbaren Codieren gemäß Patentanspruch 1, ein Verfahren zum skalierbaren Decodieren gemäß Patentanspruch 17, durch ein Verfahren zum skalierbaren Codieren gemäß Patentanspruch 19, ein Verfahren zum skalierbaren Decodieren gemäß Patentanspruch 20 oder durch ein Computerprogramm gemäß Patentanspruch 21 gelöst.

Der vorliegenden Erfindung liegt die Erkenntnis zugrunde, daß die psychoakustischen Verdeckungseffekte im Frequenzbereich bandweise und nicht linienweise auftreten, so daß durch eine Erhöhung der Genauigkeit einer Spektrallinie in einem Band derselbe Genauigkeitsgewinn pro Band erreicht wird, als wenn eine gleichmäßige bruchteilige Erhöhung der Genauigkeit im ganzen Band durchgeführt werden würde, was jedoch bei einer bitweisen Einteilung der Skalierungsschicht nicht möglich ist. Erfindungsgemäß wird die Verfeinerung der Genauigkeitsskalierung dadurch erreicht, daß die Bitschichten in Teilskalierungsschichten unterteilt werden. Im Gegensatz zum Stand der Technik, bei dem die Bits einer bestimmten Ordnung aller quantisierten Spektralwerte zu einer Skalierungsschicht zusammengefaßt wurden, werden erfindungsgemäß in einer ersten Teilskalierungsschicht die Bits dieser Ordnung von nur einem Teil der quantisierten Spektralwerte in dem betrachteten Band als Teilskalierungsschicht verwendet. Die nächste Teilskalierungsschicht erhält dann die Bits derselben Ordnung, nun jedoch von anderen quantisierten Spektralwerten als in der erste Teilskalierungsschicht, um die zweite Teilskalierungsschicht zu erhalten.

Wenn beispielsweise ein Band mit m = 4 quantisierten Spektralwerten betrachtet wird, so würde im Stand der Technik eine bestimmte Skalierungsschicht die Bits bestimmter Ordnung aller vier Spektrallinien in dem betrachteten Band umfassen. Die nächste Skalierungsschicht würde dann wieder sämtlich Bits der bestimmten Ordnung weniger 1 aller quantisierten Spektrallinien umfassen, so daß sich von Skalierungsschicht zu Skalierungsschicht ein Genauigkeitsgewinn pro Spektrallinie von 6 dB ergibt.

Erfindungsgemäß wird die bestimmte Skalierungsschicht nunmehr in maximal m Teilskalierungsschichten aufgeteilt. Die erste Teilskalierungsschicht würde dann lediglich das Bit bestimmter Ordnung der ersten Spektrallinie umfassen und keine Bits der zweiten, dritten und vierten Spektrallinie. Die zweite Teilskalierungsschicht würde dann das Bit bestimmter Ordnung der zweiten quantisierten Spektrallinie umfassen, jedoch kein Bit für die erste, dritte und vierte Spektrallinie. Auf ähnliche Art und Weise wird die dritte Teilskalierungsschicht das Bit bestimmter Ordnung der dritten Spektrallinie umfassen, und wird die vierte Teilskalierungsschicht das Bit bestimmter Ordnung der vierten Spektrallinie des betrachteten Bandes umfassen. Nachdem, wie es ausgeführt worden ist, Verdeckungseffekte bandweise und nicht linienweise auftreten, liefert jede zusätzliche Teilskalierungsschicht einen Genauigkeitsgewinn von 6/m dB. Dies bedeutet, daß bei dem betrachteten Beispiel m = 4 jede Teilskalierungsschicht einen Genauigkeitsgewinn von 1,5 dB bringt.

Es sei darauf hingewiesen, daß in einer Teilskalierungsschicht auch die Bits der bestimmten Ordnung von mehr als einer quantisierten Spektrallinie vorhanden sein können. Würde bei dem betrachteten Beispiel eine Teilskalierungsschicht die Bits bestimmter Ordnung von zwei quantisierten Spektrallinien umfassen, so wäre der Genauigkeitsgewinn pro Teilskalierungsschicht nicht mehr 1,5 dB, sondern 3, 0 dB. Allgemein gesagt wird die zweite Anzahl der quantisierten Spektralwerte, von denen Bits in der zweiten Teilskalierungsschicht vorhanden sind, so gewählt, daß sie größer oder gleich 1 und kleiner als die Gesamtanzahl der quantisierten Spektral werte in dem Band ist, wobei die zweite Anzahl von Spektralwerten ferner zumindest das Bit bestimmter Ordnung eines quantisierten Spektralwerts aufweist, der in der ersten Anzahl von quantisierten binären Spektralwerten, deren Bits in der ersten Teilskalierungsschicht vorhanden sind, nicht vorhanden ist.

Erfindungsgemäß existieren verschiedene Möglichkeiten zur Auswahl, welcher Spektralwert für die nächste Teilskalierungsschicht auszuwählen ist. Ist die Mithörschwelle beispielsweise linienweise (z. B. genauer als in 6-dB-Schritten) dargestellt, so läßt sich im Codierer genau ermitteln, welche der m Spektrallinien bisher am ungenauesten ist.

Ist die Mithörschwelle dagegen bandweise (z. B. in 6-dB-Schritten) dargestellt, so ist am Beginn der Codierung einer neuen Schicht, also beim Erzeugen einer Teilskalierungsschicht für eine neue Bitschicht, jede Spektrallinie mit derselben Genauigkeit relativ zur Mithörschwelle übertragen. In der Auswahl der Linienreihenfolge in den Teilschichten lassen sich allerdings die Werte der bis dahin übertragenen Spektrallinien berücksichtigen. Codiert man in den folgenden Teilschichten beispielsweise zuerst die Spektrallinien mit kleinen Spektralwerten, so ergibt sich eine genauere spektrale Formung des resultierenden Quantisierungsfehl ers.

Bei einem bevorzugten Ausführungsbeispiel der vorliegenden Erfindung werden Teilskalierungsschichten unter Verwendung von psychoakustisch quantisierten Spektralwerten gebildet, wobei die bestimmte Ordnung der Bits, die in den Teilskalierungsschichten verarbeitet werden, über dem betrachteten Band, das m Spektrallinien aufweist, konstant ist. Im Falle von psychoakustisch quantisierten binären Spektralwerten müssen für eine psychoakustisch transparente Codierung sämtliche Bits der quantisierten Spektralwerte übertragen werden. In diesem Fall ist insbesondere bei den niederwertigen Bits der binären quantisierten Spektralwerte eine feinere Skalierbarkeit von Vorteil, um eine Decodierung mit langsam abnehmender Qualität je nach Anzahl der berücksichtigten Teilskalierungsschichten zu ermöglichen.

Bei einem alternativen Ausführungsbeispiel der vorliegenden Erfindung sind die quantisierten Spektralwerte nicht unter Berücksichtigung psychoakustischer Gesichtspunkte quantisiert, sondern liegen im Rahmen der Rechengenauigkeit eines Rechners vor der Quantisierung vor. Alternativ sind die quantisierten Spektralwerte unter Verwendung einer Integer-MDCT erzeugt worden, die in "Audio Coding Based on Integer Transforms", 111. AES-Versammlung, New York, 2001, Geiger, Herre, Koller, Brandenburg, beschrieben ist.

Die IntMDCT ist besonders günstig, da sie die attraktiven Eigenschaften der MDCT hat, wie beispielsweise eine gute spektrale Darstellung des Audiosignals, eine kritische Abtastung und ein Blocküberlappung. Wie es ausgeführt wird, ist die IntMDCT eine verlustlose Transformation, d. h. Rundungen auf Integer-Werte während der Vorwärtstransformation können durch eine inverse Rundungsoperation bei der Rückwärtstransformation berücksichtigt werden, so daß keinerlei Rundungsfehler auftreten.

IntMDCT-Spektralwerte liegen daher verlustlos vor, d. h. sie wurden nicht unter Berücksichtigung psychoakustischer Gesichtspunkte quantisiert.

Für eine Skalierung hinsichtlich der psychoakustischen Maskierungsschwelle wird es bevorzugt, zumindest das höchstwertige Bit der psychoakustischen Maskierungsschwelle für jeden Spektralwert bzw. für jedes Band zu bestimmen und die bestimmte Ordnung der Bits, die in eine Skalierungsschicht kommen sollen bzw. in eine Teilskalierungsschicht kommen sollen, nicht mehr absolut - wie bei den psychoakustisch quantisierten Spektralwerten - festzulegen, sondern relativ zum entsprechenden höchstwertigen Bit der psychoakustischen Maskierungsschwelle. Die bestimmte Ordnung für die Bits in einer Skalierungsschicht ist daher relativ zur psychoakustischen Maskierungsschwelle definiert, beispielsweise dadurch, daß in einer Skalierungsschicht die Bits der Spektralwerte codiert werden sollen, die z. B. eine um 1 höhere Ordnung haben als das MSB der psychoakustischen Maskierungsschwelle für den entsprechenden Spektralwert bzw. - bei einer bandweisen Bereitstellung der psychoakustischen Maskierungsschwelle - für das Band, in dem der Spektralwert liegt. Die bestimmte Ordnung zur Definition der Skalierungsschichten im Falle von Spektralwerten, die nicht unter Berücksichtigung psychoakustischer Gesetze quantisiert sind, ist somit eine relative Ordnung bezogen auf das MSB der psychoakustischen Maskierungsschwelle, das für den betreffenden Spektralwert einschlägig ist.

Gemäß der vorliegenden Erfindung wird es bevorzugt, für eine psychoakustisch transparente Codierung/Decodierung sämtliche Bits der quantisierten Spektralwerte in einzelnen Skalierungsschichten oder Teilskalierungsschichten zu übertragen, die die gleiche Ordnung wie das MSB der psychoakustischen Maskierungsschwelle haben oder deren Ordnung höher als die Ordnung des MSB der psychoakustischen Maskierungsschwelle ist.

Insbesondere bei der Definition der Skalierungsschicht, die die Bits der quantisierten Spektralwerte umfassen soll, die die gleiche Ordnung haben wie die höchstwertigen Bits der psychoakustischen Maskierungsschwelle, wird es bevorzugt, eine Einteilung in Teilskalierungsschichten durchzuführen, um gewissermaßen an der Grenze der Hörbarkeit von Störungen eine bessere Genauigkeitsskalierung zu erreichen. Wird z. B. der gesamte Frequenzbereich oder ein Teil des Frequenzbereichs in Bänder von z. B. je vier Spektralwerten aufgeteilt und wird in einer Teilskalierungsschicht immer ein Spektralwert aller resultierenden Bänder übertragen, so kann mit jeder Teilskalierungsschicht eine Genauigkeitszunahme von 1,5 dB erreicht werden.

Es sei darauf hingewiesen, daß die Genauigkeitsskalierung beliebig wählbar ist, indem die Größe der Bänder eingestellt wird. Werden beispielsweise acht Spektralwerte in ein Band gruppiert und enthält jede Teilskalierungsschicht nur das Bit von einem Spektralwert aus diesem Band, so wird eine Genauigkeitsskalierung von 0,75 dB erreicht.

Ein Vorteil des erfindungsgemäßen Konzepts der Unterteilung einer Skalierungsschicht in mehrere Teilskalierungsschichten, die jedoch unabhängig voneinander extrahierbar und decodierbar sind, besteht darin, daß es mit sämtlichen bestehenden weiteren Skalierbarkeitsmöglichkeiten kompatibel ist. Beispielhaft hierfür sei die Bandbreitenskalierung genannt, bei der für die gehörangepaßte Codierung von Audiosignalen bei niedrigen Bitraten meist eine Reduzierung der Audiobandbreite vorgenommen wird, um die verbleibenden Spektralwerte mit ausreichender Genauigkeit darstellen zu können. Diese z. B. Kanalabhängige Bandbreitenskalierung läßt sich auch im erfindungsgemäßen Kontext der Verwendung von Teilskalierungsschichten realisierten. Hierzu wird bei den ersten Schichten nur ein nach oben begrenzter Frequenzbereich berücksichtigt und mit zunehmender Genauigkeit in den weiteren Schichten bzw. Teilschichten werden schrittweise weitere bisher nicht berücksichtigte höhere Frequenzbereiche mitcodiert.

Ein weiterer Vorteil des erfindungsgemäßen Konzepts der Teilskalierungsschichten besteht darin, daß es ebenfalls mit der kontextabhängigen arithmetischen Codierung kompatibel ist, die auch bei MPEG-4 BSAC verwendet wird. MPEG-4 BSAC ist in "Coding of Audio-Visual Objects: Audio", International Standard 144 96-3, 2. Auflage, ISO/IEC Moving Pictures Expert Group, ISO/IEC JTC1/SC29/WG11, 2001, beschrieben.

Das erfindungsgemäße Konzept ist ferner dahingehend vorteilhaft, daß decodiererseitig eine beliebige Interpretation der quantisierten Werte vorgenommen werden kann. Werden nicht alle Bitschichten des Spektrums übertragen, so liegen im Decodierer für jeden Spektralwert nur die höherwertigen Bits vor. Außerdem läßt sich bei der bei einem bevorzugten Ausführungsbeispiel der vorliegenden Erfindung mitübertragenen Mithörschwelle und der Zahl der übertragenen Bitschichten ermitteln, wie viele Bits dieses Spektralwerts nicht übertragen wurden. Aus diesen Daten muß der Decodierer einen quantisierten Spektralwert rekonstruieren. Eine plausible Möglichkeit hierfür wäre, die nichtübertragenen Bits durch Nullen zu ersetzen. Damit führt der Quantisierungsprozeß durch Weglassen von Skalierungsschichten immer zu einer Abrundung zu kleineren Absolutwerten. Diese Art der Quantisierung führt jedoch nicht zum kleinstmöglichen mittleren Quantisierungsfehler. Der mittlere Quantisierungsfehler läßt sich bei dieser Art der Quantisierung reduzieren, indem man alternative Decodiererrekonstruktionsstrategien einsetzt.

Bevorzugte Ausführungsbeispiele der vorliegenden Erfindung werden nachfolgend Bezug nehmend auf die beiliegenden Zeichnungen näher erläutert. Es zeigen:

Fig. 1a	ein Blockschaltbild eines erfindungsgemäßen Codierers;

Fig. 1b	eine schematische Darstellung eines skalierten codierten Signals mit Skalierungsschichten und Teilskalierungsschichten;

Fig. 2	eine Aufteilung eines Betragsspektrums in Bitschichten parallel zur Mithörschwelle;

Fig. 3	eine schematische Darstellung der Aufteilung von Fig. 2 unter Berücksichtigung des MSB der Maskierungsschwelle;

Fig. 4	eine schematische Darstellung zur Veranschaulichung der Auswahl eines Spektralwerts für die nächste Teilskalierungsschicht bei kontinuierlich gegebener Mithörschwelle;

Fig. 5	eine schematische Darstellung zur Veranschaulichung der Auswahl eines Spektralwerts für eine Teilskalierungsschicht bei einer bandweisen Darstellung der Mithörschwelle;

Fig. 6	ein detailliertes Blockschaltbild eines erfindungsgemäßen Codierers;

Fig. 7	ein Blockschaltbild eines erfindungsgemäßen Decodierers mit IntMDCT;

Fig. 8	ein Blockschaltbild eines bekannten BSAC-Codierers;

Fig. 9	ein Blockschaltbild eines bekannten BSAC-Decodierers;

Fig. 10a	ein schematisches Blockschaltbild eines bekannten Codierers mit MDCT und 50-Prozent-Überlappung;

Fig. 10b	ein Blockschaltbild eines bekannten Decodierers zum Decodieren der durch Fig. 10a erzeugten Werte;

Fig. 11	ein Blockschaltbild einer bevorzugten Einrichtung zum Verarbeiten von zeitdiskreten Audioabtastwerten, um ganzzahlige Werte zu erhalten, aus denen ganzzahlige Spektralwerte mittelbar sind;

Fig. 12	eine schematische Darstellung der Zerlegung einer MDCT und einer inversen MDCT in Givens-Rotationen und zwei DCT-IV-Operationen; und

Fig. 13	eine Darstellung zur Veranschaulichung der Zerlegung der MDCT mit 50-Prozent-Überlappung in Rotationen und DCT-IV-Operationen.

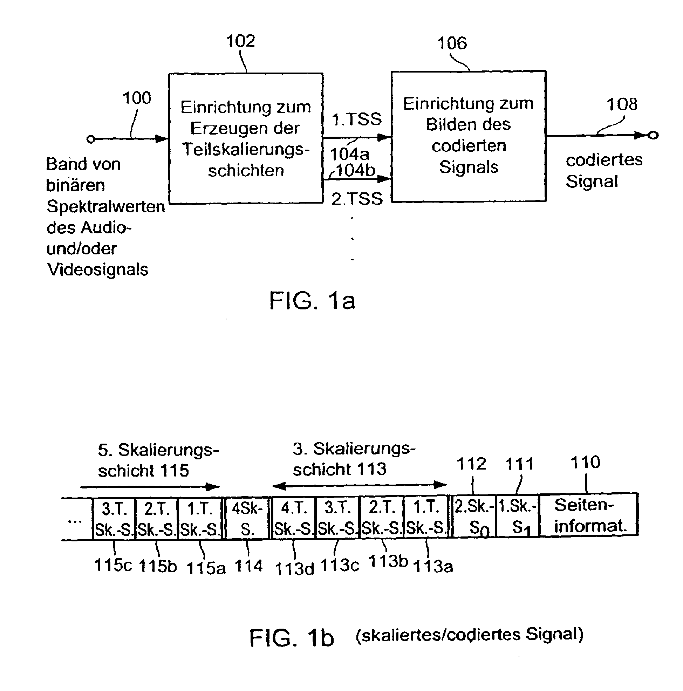

Fig. 1a zeigt ein schematisches Blockschaltbild einer Vorrichtung zum skalierbaren Codieren eines Spektrums eines Signals, das Audio- und/oder Videoinformationen umfaßt, wobei das Spektrum binäre Spektralwerte aufweist, die in Bändern gruppiert sind. Ein Band von binären Spektralwerten des Audio- und/oder Videosignals wird in einen Eingang 100 der Vorrichtung zum skalierbaren Codieren von Fig. 1a eingespeist. Die Gruppierung von binären Spektralwerten in Bänder kann beliebig erfolgen. Wie es ausgeführt worden ist, basiert die vorliegende Erfindung darauf, daß Verdeckungseffekte im Frequenzbereich bandweise und nicht spetralwertweise auftreten. Aus diesem Grund wird es bevorzugt, die Gruppierung der binären Spektralwerte in Bänder unter Verwendung z. B. der Frequenzgruppen (critical bands) durchzuführen, oder unter Verwendung von Bändern, die kleiner sind als die Frequenzgruppen, d. h. die weniger Spektralwerte umfassen, als eine Frequenzgruppe umfaßt, so daß eine psychoakustische oder psychooptische Frequenzgruppe in z. B. zwei oder mehr Bändern gruppiert wird.

Ein Band von binären Spektralwerten des Audio- und/oder Videosignals wird in eine Einrichtung 102 zum Erzeugen der Teilskalierungsschichten eingespeist, wobei die Einrichtung 102 zum Erzeugen der Teilskalierungsschichten eine erste Teilskalierungsschicht, eine zweite Teilskalierungsschicht und gegebenenfalls weitere Teilskalierungsschichten erzeugt. Die Teilskalierungsschichten werden an Ausgangsleitungen 104a, 104b, ... aus der Einrichtung 102 ausgegeben und einer Einrichtung 106 zum Bilden des codierten Signals übermittelt, wobei die Einrichtung 106 zum Bilden des codierten Signals ausgebildet ist, um die erste Teilskalierungsschicht (TSS) und die zweite Teilskalierungsschicht so in das codierte Signal an einem Ausgang 108 der in Fig. 1a gezeigten Vorrichtung aufzunehmen, daß die erste und die zweite Teilskalierungsschicht getrennt voneinander decodierbar sind.

Die Einrichtung 102 zum Erzeugen der Teilskalierungsschichten arbeitet unter Verwendung von Bits bestimmter Ordnung einer ersten Anzahl der binären Spektralwerte in einem Band, wobei die erste Anzahl größer oder gleich 1 ist und kleiner als eine Gesamtanzahl der binären Spektralwerte in dem Band ist. Zum Erzeugen der zweiten Teilskalierungsschicht verwendet die Einrichtung 102 Bits der bestimmten Ordnung einer zweiten Anzahl der binären Spektralwerte, wobei die zweite Anzahl der binären Spektralwerte so gewählt wird, daß sie größer oder gleich 1 und kleiner als die Gesamtanzahl der binären Spektralwerte in dem Band ist, und wobei die zweite Anzahl der binären Spektralwerte so bestimmt wird, daß sie zumindest einen binären Spektralwert aufweist, der in der ersten Anzahl von binären Spektralwerten nicht enthalten ist. Dies bedeutet, daß jede Teilskalierungsschicht, wenn sie decodiert worden ist, dazu führt, daß wenigstens ein Spektralwert des betrachteten Bandes im Decodierer mit einer höheren Genauigkeit vorliegt, als wenn diese Teilskalierungsschicht nicht in Betracht gezogen worden wäre.

Fig. 1b zeigt ein skaliertes codiertes Signal als schematische Bitstromdarstellung. Der Bitstrom, der das skalierte codierte Signal darstellt, umfaßt zunächst Seiteninformationen 110, die derart gestaltet sein können, wie es durch den BSAC-Standard vorgegeben ist. Der Bitstrom umfaßt dann eine erste Skalierungsschicht 111, eine zweite Skalierungsschicht 112, eine dritte Skalierungsschicht 113, eine vierte Skalierungsschicht 114, eine fünfte Skalierungsschicht 115, ... Lediglich beispielhaft ist bei dem in Fig. 1b gezeigten skalierten/codierten Signal die dritte Skalierungsschicht 113 in vier Teilskalierungsschichten (T. -Sk. -S) unterteilt, die mit 113a - 113d bezeichnet sind. Darüber hinaus ist die fünfte Skalierungsschicht lediglich beispielhaft ebenfalls in Teilskalierungsschichten unterteilt, und zwar in die Teilskalierungsschichten 115a, 115b, 115c, ...

Die erste Skalierungsschicht 111 umfaßt beispielsweise die Bits höchster Ordnung - entweder absolut gesehen oder, wie es ausgeführt worden ist, relativ zur psychoakustischen Maskierungsschwell e - der Spektralwerte des Spektrums des Audio- und/oder Videosignals. Die zweite Skalierungsschicht 112 umfaßt ebenfalls als komplette Skalierungsschicht die Bits der Spektralwerte mit einer um 1 niedrigeren Ordnung. Die dritte Skalierungsschicht umfaßt insgesamt gesehen die Bits einer um 2 niedrigeren Ordnung der Spektralwerte, jedoch nicht als eine komplette Skalierungsschicht, die nur komplett decodiert werden kann, sondern - zur feineren Genauigkeitsskalierung - aufgeteilt in vier voneinander getrennt decodierbare Teilskalierungsschichten 113a, 113b, 113c, 113d. Bei dem in Fig. 1b dargestellten Beispiel wird das gesamte Spektrum, also die Gesamtanzahl der Spektralwerte, in Bändern von je vier Spektralwerten aufgeteilt. Die erste Teilskalierungsschicht 113a umfaßt dann die Bits der um 3 niedrigeren Ordnung von jeweils einem Spektralwert in einem der Bänder. Die zweite Teilskalierungsschicht umfaßt analog die Bits derselben Ordnung, jedoch von anderen Spektralwerten in den einzelnen Bändern. Die dritte Teilskalierungsschicht 113c umfaßt wiederum die Bits derselben Ordnung, jedoch wieder von anderen Spektralwerten in einem Band. Dasselbe gilt für die vierte Teilskalierungsschicht. Wurden Bänder gewählt, die jeweils vier Spektralwerte umfassen, so hat jede Teilskalierungsschicht ein Bit eines Spektralwerts für jedes Band. Dies bedeutet, daß jede Teilskalierungsschicht bei dem in Fig. 1b dargestellten Beispiel Informationen über ein Viertel der Anzahl von Bits aufweist, wie eine komplette Skal ierungsschicht, wie z. B. die erste Skalierungsschicht 111 oder die zweite Skalierungsschicht 112.

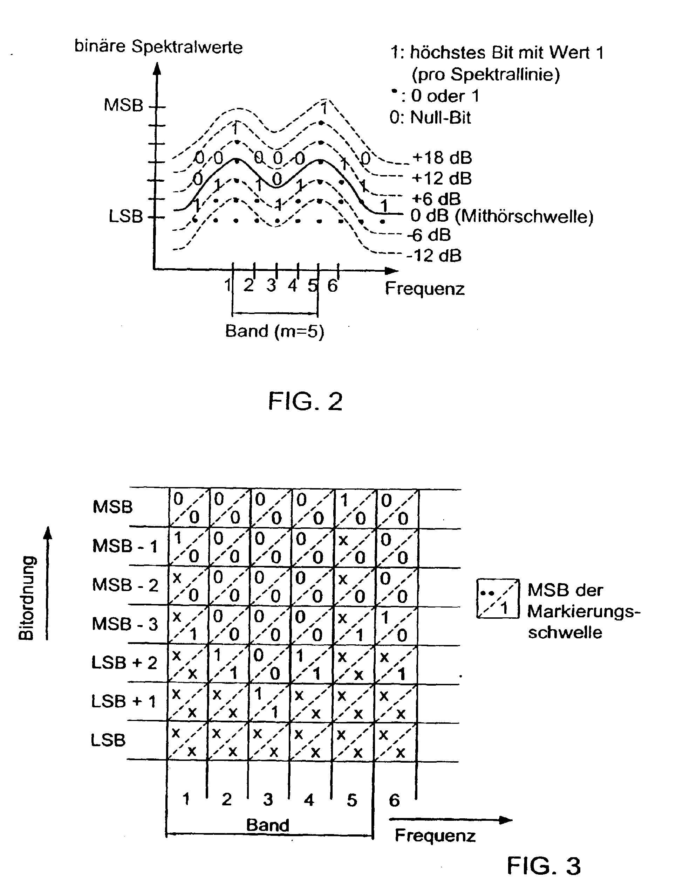

Im nachfolgenden wird anhand von Fig. 2 eine Aufteilung des Betragsspektrums in Bitschichten parallel zur Mithörschwelle dargestellt. Die in Fig. 2 durch ihre Bitmuster dargestellten Spektralwerte sind Spektralwerte, wie sie beispielsweise durch die IntMDCT erhalten werden, auf die später eingegangen wird. Die in Fig. 2 anhand ihres Bitmusters dargestellten binären Spektralwerte können jedoch auch die Ergebnisse eines beliebigen Zeitbereich-/Frequenzbereichumsetzungsalgorithmus, wie z. B. einer FFT, sein, und zwar dargestellt als binäre Ganzzahlen prinzipiell beliebiger Größe. Die in Fig. 2 dargestellten binären Spektralwerte sind somit noch nicht unter Verwendung psychoakustischer Gesichtspunkte quantisiert worden.

In Fig. 2 ist ferner die psychoakustische Mithörschwelle als durchgezogene kontinuierliche Linie eingezeichnet, die mit 0 dB bezeichnet ist. Durch den Verlauf der Mithörschwelle im Spektrum ergeben sich - parallel zur Mithörschwelle - verlaufende Bitschichten, wobei die Zugehörigkeit eines Bits zu einer Bitschicht die psychoakustische bzw. psychooptische Relevanz dieses Bits widerspiegelt. So ist aus Fig. 2 beispielsweise zu ersehen, daß der mit "1" bezeichnete Spektralwert Bits aufweist, die zwei Bitschichten oberhalb der Mithörschwelle belegen. Dagegen ist der noch größere Spektralwert 5 dadurch ausgezeichnet, daß er höherwertige Bits aufweist, die drei Bitschichten oberhalb der Mithörschwelle belegen. Die Spektralwerte 2, 3 und 4 dagegen umfassen lediglich Bits, die in einer Bitschicht unterhalb der Mithörschwelle liegen.

Im Hinblick auf die psychoakustische Transparenz, also auf die Hörbarkeit von Störungen aufgrund einer Quantisierung bzw. aufgrund eines "Weglassens" von niederwertigen Bits wird die Mithörschwelle als 0-dB-Linie bezeichnet. Die psychoakustisch signifikanteste Bitschicht, und damit die erste Skalierungsschicht bei dem in Fig. 2 gezeigten Beispiel, ist die Bitschicht zwischen 12 dB und 18 dB. Hier liefert lediglich der Spektralwert mit der Nr. 5 einen Beitrag. Die erste Skalierungsschicht 111 von Fig. 1b würde daher bei dem in Fig. 2 gezeigten Beispiel lediglich Informationen über den Spektralwert 5 umfassen.

Die zweite Bitschicht zwischen 6 dB und 12 dB, also die zweite Skalierungsschicht 112 von Fig. 2, umfaßt lediglich Informationen über Bits des ersten Spektralwerts und des fünften Spektralwerts, jedoch keine Informationen über die anderen Spektralwerte, da deren MSB in niedrigeren Bitschichten liegen.

Die dritte Bitschicht 113 bei dem in Fig. 2 gezeigten Beispiel umfaßt die Bits zwischen der 0-dB-Linie und der +6-dB-Linie in Fig. 2 und umfaßt nunmehr Informationen über die sechste, die fünfte und die erste Spektrallinie, jedoch immer noch keine Informationen über die anderen Spektral - werte. Würde nunmehr die dritte Skalierungsschicht bei dem in Fig. 2 gezeigten Beispiel als eine komplette Skalierungsschicht verarbeitet werden, so würde die Genauigkeitsabstufung von der zweiten Skalierungsschicht zur dritten Skalierungsschicht sehr stark sein, dahingehend, daß eine Decodierung lediglich der ersten und der zweiten Skalierungsschicht - ohne die dritte Skalierungsschicht - zu starken hörbaren Störungen führen würde. Dagegen würde eine Berücksichtigung der dritten Skalierungsschicht zu nahezu keinen hörbaren Störungen mehr führen. Eine Abstufung in diesem Grenzbereich wird erfindungsgemäß dadurch erreicht, daß Teilskalierungsschichten der dritten Skalierungsschicht gebildet werden, wobei bei der in Fig. 2 gezeigten Situation trotz einer Bandaufteilung beispielsweise in m = 5 lediglich zwei Teilskalierungsschichten genügen würden, wobei eine erste Teilskalierungsschicht das Bit zweiter Ordnung des Spektralwerts Nr. 1 umfassen würde, während eine zweite Teilskalierungsschicht das Bit dritter Ordnung des Spektralwerts Nr. 5 umfassen würde, wobei diese Bits in den Teilskalierungsschichten für den Spektralwert Nr. 1 und den Spektralwert Nr. 5 dieselbe Ordnung relativ zu den niederstwertigen Bits der Maskierungsschwelle haben.

Nachfolgend wird zur Verdeutlichung dieses Sachverhalts auf Fig. 3 Bezug genommen. Fig. 3 zeigt eine detailliertere Darstellung der Situation in Fig. 2, wobei nun jedoch die Mithörschwelle nicht mehr, wie in Fig. 2 dargestellt, anhand ihres tatsächlichen Wertes eingetragen ist, sondern in Fig. 3 bezüglich ihres höchstwertigen Bits dargestellt ist.

Erfindungsgemäß wurde herausgefunden, daß für eine psychoakustische Transparenz, um alle ungünstigen Fälle abzufangen, so viele Bits eines quantisierten Spektralwerts übertragen werden müssen, daß die Ordnung des zuletzt übertragenen Bits gleich der Ordnung des höchstwertigen Bits der Maskierungsschwelle, die diesem Spektralwert zugeordnet ist, entspricht. In anderen Worten ausgedrückt bedeutet dies, daß von einem Spektralwert - sofern sie existieren - alle Bits übertragen werden müssen, die eine höhere Ordnung haben als das MSB der Maskierungsschwelle, die diesem Spektralwert zugeordnet ist, und daß ferner auch das Bit des Spektralwerts, das dieselbe Ordnung hat wie das MSB der Maskierungsschwelle, zu übertragen ist.

Die erfindungsgemäße Genauigkeitsskalierung ist besonders um die psychoakustische Maskierungsschwelle herum interessant, also für die Bits von Spektralwerten, die dieselbe Ordnung haben wie das MSB der Maskierungsschwelle, das diesem Spektralwert zugeordnet ist. Diese Bits sind bei dem in Fig. 3 gezeigten Diagramm als fett umrandete Kästchen eingezeichnet.

Allgemein gesagt ist in Fig. 3 in vertikaler Richtung die Bitordnung eingezeichnet, und zwar von MSB über MSB - 1, MSB - 2, MSB - 3, LSB + 2, LSB + 1 zu LSB eingezeichnet. Der Ausdruck "MSB" in Fig. 3 bezeichnet jedoch nicht das MSB eines bestimmten Spektralwerts oder einer psychoakustischen Maskierungsschwelle, sondern das absolute MSB, also die maximal darstellbare Zweierpotenz im binären System.

Dagegen ist in den in Fig. 3 dargestellten dick umrandeten Kästchen das MSB der Mithörschwelle für einen Spektralwert 1 bis 6 dargestellt. Insbesondere ist jedes Kästchen durch eine gestrichelte Diagonale aufgeteilt, wobei oberhalb der Diagonale ein Bit eines Spektralwerts steht, während unterhalb der Diagonale ein Bit der Maskierungsschwelle für diesen Spektralwert steht. Mit "1" bezeichnete Bits haben den Wert "1". Mit "0" bezeichnete Bits haben den Wert "0". Schließlich haben mit "x" gekennzeichnete Bits den Wert "0" oder "1". Die erste Skalierungsschicht bzw. erste Bitschicht bei dem in Fig. 3 gezeigten Beispiel umfaßt somit das Bit MSB des Spektralwerts 5, das Bit "MSB - 1" des Spektralwerts 4, das Bit "MSB - 2" des Spektralwerts 3, das Bit "MSB - 1" des Spektralwerts 2 und das Bit MSB des Spektralwerts 1. Die bestimmte Ordnung der Bits in der ersten Skalierungsschicht ist daher um 3 höher als die Ordnung des Bits, in dem das MSB der Maskierungsschwelle liegt.

Die zweite Skalierungsschicht würde dann die Bits (MSB - 1), (MSB - 2), (MSB - 3), (MSB - 2) und (MSB - 1) für die Spektralwerte 5, 4, 3, 2 und 1 umfassen. Die dritte Skalierungsschicht würde dann die Bits (MSB - 2), (MSB - 3), (LSB + 2), (MSB - 3) und (MSB - 2) wieder für die Spektral werte 5, 4, 3, 2 und 1 umfassen. Die vierte Skalierungsschicht, deren Aufteilung in Teilskalierungsschichten bevorzugt wird, würde dann die dick umrandeten Bits aus Fig. 3 umfassen, also (MSB - 3), (LSB + 2), (LSB + 1), (LSB + 2) und (MSB - 3) wieder für die Spektralwerte 5, 4, 3, 2 und 1 umfassen. Eine Übertragung der ersten, zweiten, dritten und vierten Skalierungsschicht führt zu psychoakustischer Transparenz, während, wenn die vierte Skalierungsschicht weggelassen werden würde, eine Genauigkeitseinbuße von 6 dB erhalten wird.

Erfindungsgemäß wird daher die vierte Skalierungsschicht in z. B. fünf Teilskalierungsschichten aufgeteilt, wobei in jeder Teilskalierungsschicht ein Spektralwertbit für einen Spektralwert in dem fünf Spektralwerte umfassenden Band vorgesehen sein wird.

Jede Teilskalierungsschicht liefert somit eine Genauigkeitszunahme von 6 dB/( m = 5) = 1,2 dB.

Damit bei dem in Fig. 3 dargestellten Ausführungsbeispiel der Verlauf der Bitschichten im Decodierer nachvollzogen werden kann, wird die Mithörschwelle bzw. der Verlauf der gerade noch psychoakustisch signifikanten Bits, also der MSBs der Mithörschwelle, zum Decodierer beispielsweise innerhalb der Seiteninformationen 110 von Fig. 1b übertragen. Hierfür werden zwei Alternativen bevorzugt. Diese sind die linienweise Darstellung und die bandweise Darstellung.

Bei einer linienweisen Darstellung läßt sich die Mithörschwelle aufgrund ihres kontinuierlichen Verlaufs effizient durch die Frequenzantwort eines FIR-Filters mit wenigen Koeffizienten oder durch polynominale Interpolation darstellen. Hierbei entsteht also für jeden Frequenzwert ein eigener Wert der Mithörschwelle.

Bei der bandweisen Darstellung wird darauf Bezug genommen, daß die psychoakustischen Verdeckungseffekte, die der Mithörschwelle zugrunde liegen, bandweise ausgedrückt werden können, wobei die Bandeinteilung der Bark-Skala folgen kann und vorzugsweise eine Verfeinerung der Bark-Skala darstellt. Diese bandweise Darstellung wird auch bei bekannten Verfahren zur gehörangepaßten Audiocodierung, wie z. B. MPEG-2 AAC, verwendet. Für die Darstellung der Mithörschwelle reicht es somit aus, einen Wert pro Band zu übertragen.

Wie es bereits ausgeführt worden ist, stellen die Fig. 2 und 3 die Definition von Bitschichten gleicher psychoakustischer Signifikanz beispielsweise im IntMDCT-Spektrum dar. Die Bits werden, wie es ausgeführt worden ist, beginnend mit der höchsten Schicht, Schicht für Schicht codiert und übertragen. Beim Erreichen der Bitschicht, die der Mithörschwelle entspricht (den in Fig. 3 fett umrandeten Bits), ist das übertragene Signal psychoakustisch transparent. Die Übertragung weiterer Bitschichten, also von Bits unterhalb der in Fig. 3 dargestellten dick umrandeten Kästen, erhöht die Genauigkeit und damit den Sicherheitsabstand zur Mithörschwelle. Werden schließlich alle zur Verfügung stehenden Bits übertragen, so arbeitet das Verfahren verlustlos. Wie es ausgeführt worden ist, wird zur Redundanzreduktion der übertragenen Bits vorzugsweise eine arithmetische Codierung eingesetzt.

Die Verfeinerung der Genauigkeitsskalierung aufgrund der erfindungsgemäß verwendeten Teilskalierungsschichten, die im Decodierer getrennt voneinander verwertbar sind, ist insbesondere im Bereich oberhalb der Mithörschwelle, auf der Mithörschwelle und unterhalb der Mithörschwelle (bezogen auf die Ordnung des MSB der Mithörschwelle) von besonderem Vorteil. Ohne Genauigkeitsskalierung ergibt sich bei einer schichtweisen Öbertragung der Bits des IntMDCT-Spektrums eine Erhöhung der Genauigkeit um 6 dB. Beachtet man jedoch, daß zumindest bei rauschartigen Signalen die Mithörschwelle nur etwa 6 dB unterhalb des Signals liegt, so sieht man, daß eine Skalierung der Genauigkeit in 6-dB-Schritten für eine effiziente Codierung der gerade noch hörbaren Signalanteile oftmals zu grob ist.

Die im Vorstehenden beschriebene Aufteilung in 1,5-dB-Schritte, wenn Bänder mit vier Spektralwerten verwendet werden, und in jeder Teilskalierungsschicht ein einziger Spektralwert angeordnet ist, oder wenn beispielsweise Bänder mit acht Spektralwerten verwendet werden und in jeder Teilskalierungsschicht zwei Spektralwerte berücksichtigt werden, soll eine Entsprechung zur Anpassung der Genauigkeit in 1,5-dB-Schritten, sein, die auch bei MPEG-2 AAC vorliegt. Hier erfolgt eine bandweise adaptive Quantisierung von kontinuierlichen Spektralwerten mit Hilfe von Skalierungsfaktoren der Form $2^{0,25 \cdot n}$, wobei n ganzzahlige Werte annimmt. Wird n um 1 erhöht, so ändert sich bei MPEG-2 AAC die Genauigkeit der Quantisierung um 1,5 dB.

Das erfindungsgemäße Konzept liefert diese Verfeinerung der Genauigkeitsskalierung, indem die Bitschichten in Teilskalierungsschichten unterteilt werden, wobei m Teilschichten einer Schicht erhalten werden, indem je m benachbarte Linien auf die m Teilschichten aufgeteilt werden. Mit jeder neu übertragenen Teilschicht erhöht sich dann die Genauigkeit um 6/m dB. Für m = 4 ist also beispielsweise eine Abstufung in 1,5-dB-Schritten möglich. Im Gegensatz zur oben beschriebenen Quantisierung beim Verfahren MPEG-2 AAC wird jedoch beim erfindungsgemäßen Konzept die Genauigkeit in jeder Teilschicht für nur eine von m Spektrallinien erhöht. Da die psychoakustischen Verdeckungseffekte im Frequenzbereich bandweise und nicht linienweise auftreten, erhält man durch die Erhöhung der Genauigkeit einer Spektrallinie denselben Genauigkeitsgewinn pro Band wie bei der gleichmäßigen Erhöhung der Genauigkeit im ganzen Band.

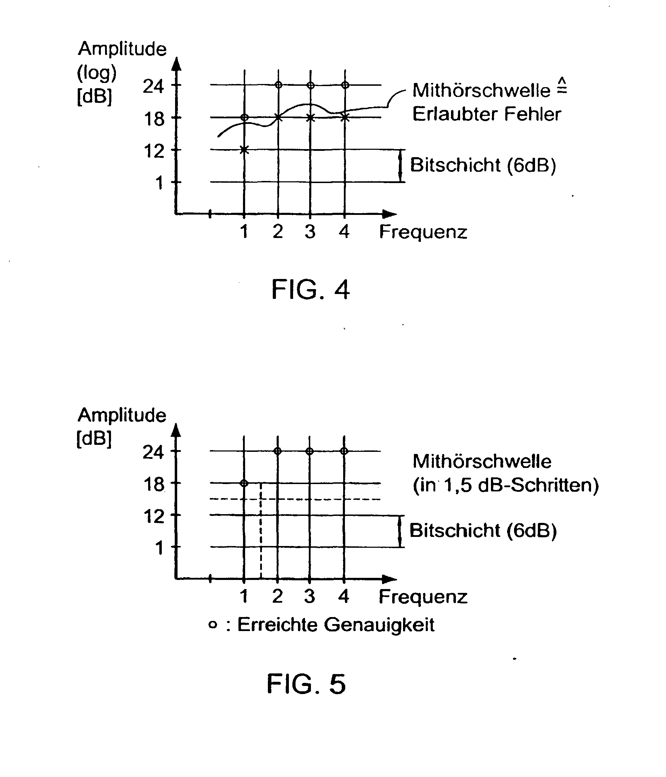

Nachfolgend wird anhand der Fig. 4 und 5 auf bevorzugte Arten und Weisen zum Auswählen eingegangen, welche der m Spektrallinien in der nächsten Teilschicht verfeinert wird.

Fig. 4 zeigt einen Fall, bei dem die Mithörschwelle linienweise dargestellt ist. Die Mithörschwelle ist als durchgezogene Linie eingezeichnet. Darüber ist durch ein "Kreuz" das MSB der Mithörschwelle eingezeichnet. Die Decodierung aller oberhalb liegenden in Fig. 4 nicht dargestellten Skalierungsschichten ist bereits abgeschlossen, so daß die Spektralwerte 1, 2, 3 und 4 mit einer durch "0" dargestellten Genauigkeit vorliegen. Das mit "0" dargestellte bisher übertragene Bit stellt daher die Genauigkeit der Spektrallinie im Decodierer dar. Durch einen Vergleich des Werts des bisher verarbeiteten Spektralwerts im Codierer mit dem Wert der Mithörschwelle für diesen Spektralwert ergibt sich unmittelbar, welcher Spektralwert bisher am ungenauesten übertragen worden ist. Bei dem in Fig. 4 gezeigten Beispiel ist dies, wie es aus Fig. 4 ohne weiteres ersichtlich ist, der Spektralwert 2. Die erste Teilskalierungsschicht wird daher das nächste Bit des Spektralwerts Nr. 2 erhalten.

Der nächste Spektralwert für die zweite- Teilskalierungsschicht ist der Spektralwert Nr. 4. Dann dürfte der Spektralwert Nr. 1 für die dritte Teilskalierungsschicht folgen und schließlich der Spektralwert Nr. 3 für die vierte Teilskalierungsschicht.

Das nächste zu codierende Bit wird also der Frequenzlinie mit der größten Differenz zwischen der Genauigkeit des bisher verarbeiteten Spektralwerts und der Mithörschwelle bestimmt.

Es sei darauf hingewiesen, daß dieser Vorgang im Decodierer umgekehrt werden kann, derart, daß der De-

**EP 1 502 255 B1**

codierer in der Lage ist, ohne zusätzliche Seiteninformationen herauszufinden, welcher Spektralwert durch die nächste zu decodierende Teilskalierungsschicht weiter verfeinert wird, solange der Decodierer den kontinuierlichen Verlauf der psychoakustischen Maskierungsschwelle kennt.

Fig. 5 zeigt den Fall der bandweisen Darstellung der Mithörschwelle. Aus Fig. 5 ergibt sich, daß die Bits der Spektralwerte 2, 3, 4 als nächste zu verarbeitende Teilskalierungsschichten in Betracht kommen, da sie bisher im Vergleich zur Mithörschwelle am weitesten von derselben beabstandet sind. Dagegen liegt der Wert des Spektralwerts 1 bereits nahe auf der Mithörschwelle, so daß der Spektral - wert 1 nicht unbedingt noch verfeinert werden muß, sehr wohl aber die Spektralwerte 2, 3 und 4.

Prinzipiell könnte jeder der Spektralwerte 2, 3, 4 in der nächsten Teilskalierungsschicht berücksichtigt werden. Ein Noise-Shaping ist jedoch dadurch erreichbar, daß der absolute Wert der Spektralwerte 2, 3 und 4, wie sie bereits im Codierer verarbeitet worden sind bzw. im Decodierer verarbeitet worden sind, berücksichtigt wird. Stellt sich beispielsweise heraus, daß für den Spektralwert Nr. 2 bereits z. B. sechs höherwertigere Bits übertragen worden sind, was darauf hinweist, daß der Spektralwert mit der Nr. 2 sehr groß ist, so bedeutet dies, relativ gesehen, daß dieser Spektralwert bereits ziemlich genau dargestellt ist. Wird dagegen festgestellt, daß der Spektralwert mit der Nr. 3 ein kleiner Spektralwert ist, dahingehend, daß lediglich z. B. nur ein einziges höherwertiges Bit übertragen worden ist, so wird, wie es erfindungsgemäß bevorzugt ist, zunächst den Spektralwert mit der Nr. 3 in einer Teilskalierungsschicht zu verarbeiten und dann erst den Spektralwert Nr. 2. Diese Erkenntnis basiert darauf, daß davon ausgegangen wird, daß die relative Genauigkeit für den Höreindruck wesentlicher ist als die absolute Genauigkeit.

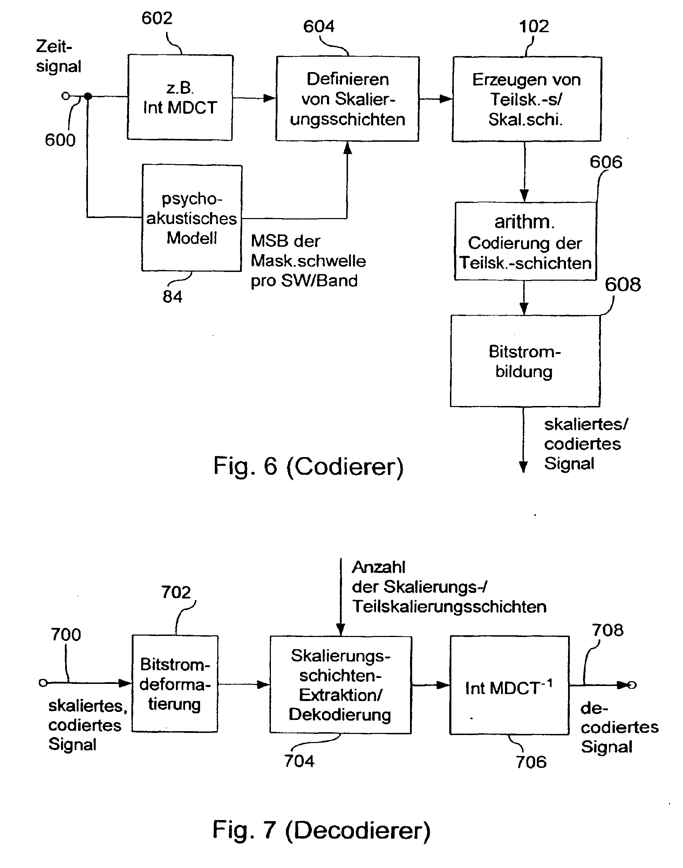

Fig. 6 zeigt ein insgesamtes Blockschaltbild eines erfindungsgemäßen Codierers. Das Zeitsignal wird an einem Eingang 600 in den Codierer eingespeist und z. B. mittels einer IntMDCT 602 in den Frequenzbereich umgesetzt. Parallel hierzu arbeitet ein psychoakustisches Modell 84, das prinzipiell denselben Aufbau haben kann wie das psychoakustische Modell 84, das in Fig. 8 dargestellt ist. Die Maskierungsschwelle, die durch das psychoakustische Modell 84 berechnet wird, wird nun jedoch nicht, wie in Fig. 8, zum Quantisieren verwendet, sondern zum Definieren 604 von Skalierungsschichten. Insbesondere liefert bei einem bevorzugten Ausführungsbeispiel der vorliegenden Erfindung die Einrichtung 84 das MSB der Maskierungsschwelle entweder pro Spektralwert oder pro Band, um gewissermaßen die in Fig. 3 dargestellten "dick umrandeten" Kästen zu bestimmen. Die Einrichtung 604 definiert dann Skalierungsschichten relativ zu der Ordnung der MSBs der Maskierungsschwelle (der dicken Kästen in Fig. 3).

Die Einrichtung 604 zum Definieren von Skalierungsschichten steuert die Einrichtung 102 zum Erzeugen von Teilskalierungsschichten bzw. zum Erzeugen von Skalierungsschichten, wenn sowohl Skalierungsschichten als auch Teilskalierungsschichten eingesetzt werden sollen. Bei dem in Fig. 3 gezeigten Ausführungsbeispiel würde die Einrichtung 102 derart arbeiten, daß sie zunächst drei komplette Skalierungsschichten erzeugt und einer Einrichtung 606 zur arithmetischen Codierung zuführt und dann für die vierte Skalierungsschicht, die die Bits der Spektralwerte betrifft, deren Ordnung gleich der Ordnung der MSBs der Maskierungsschwelle ist, in eine bestimmte Anzahl von Teilskalierungsschichten auf zuteilen. Nach der arithmetischen Codierung der Teilskalierungsschichten werden die Skalierungsschichten und die Teilskalierungsschichten in einem Bitstrom durch eine Bitstrombildungseinrichtung 608 erzeugt, um ein skaliertes/codiertes Signal zu erhalten, das prinzipiell den in Fig. 1b gezeigten Aufbau haben kann.

Das skalierte/codierte Signal wird in einen Eingang 700 eines in Fig. 7 gezeigten Decodierers eingespeist, wobei eine Einrichtung 702 den in Fig. 1b gezeigten Bitstrom deformatieren wird, um die Seiteninformationen von den Skalierungsschichten zu trennen etc. Eine Extraktions-/Decodierungseinrichtung 704 führt dann eine arithmetische Codierung der Skalierungsschichten und der Teil skal ierungsschichten nacheinander durch, so daß sich in einem decodiererseitigen, in Fig. 7 nicht gezeigten Speicher nach und nach die Bitmuster der einzelnen Spektralwerte aufbauen.

Je nach Anzahl der übertragenen Skalierungsschichten bzw. je nach Steuersignal an einem Steuereingang in der Einrichtung 704 hört der Decodierer irgendwann damit auf, weitere Skalierungsschichten oder Teilskalierungsschichten zu decodieren. Wurden im Bitstrom sämtliche codiererseitig erzeugten Skalierungsschichten und Teilskalierungsschichten übertragen und decodiert, so hat eine verlustlose Codierung/Übertragung/Decodierung stattgefunden, und der Decodierer muß keine Interpretation von quantisierten Werten durchführen. Die erhaltenen Spektralwerte nach verlustloser oder nahezu verlustloser Codierung/Übertragung/Decodierung werden einer Rücktransformationseinrichtung 706 zugeführt, die beispielsweise eine inverse IntMDCT (IntMDCT$^{-1}$) durchführt, um an einem Ausgang 708 ein decodiertes Signal zu erhalten. Wurden beispielsweise aufgrund des Übertragungs - kanals bestimmte Skalierungsschichten oder auch Teilskalierungsschichten abgeschnitten oder war der Decodierer aufgrund seines Aufbaus nicht in der Lage, alle Skalierungsschichten oder Teilskalierungsschichten zu verarbeiten, oder wurde die Einrichtung 704 derart gesteuert, um nur eine bestimmte Anzahl von Skalierungsschichten bzw. Teilskalierungsschichten zu verarbeiten, so führt der erfindungsgemäße Decodierer eine Interpretation der bisher vorliegenden Spektralwertebitmuster durch. Werden nicht alle Bitschichten des Spektrums übertragen, so liegen im Decodierer somit für jeden Spektralwert nur die höherwertigen Bits vor.

Unter Kenntnis der Mithörschwelle und der Zahl der insgesamt im Decodierer für den verlustlosen Fall erzeugten bzw. erzeugbaren Bitschichten ermittelt der Decodierer nunmehr, wie viele Bitschichten - und damit wie viele Bits - für jeden einzelnen Spektralwert nicht übertragen worden sind. Aus diesen Daten konstruiert der Decodierer einen quan-

**12**

tisierten Spektralwert. Die einfachste Lösung hierfür besteht darin, die nichtübertragenen Bits durch Nullen zu ersetzen. In diesem Fall würde der Quantisierungsprozeß immer zu einer Abrundung zu kleineren Absolutwerten führen.

Erfindungsgemäß wird es jedoch bevorzugt, den mittleren Quantisierungsfehler so klein als möglich zu halten. Dies wird erreicht, indem ein sogenannter "Uniform Midrise Quantizer" verwendet wird, wie er in N.S. Jayant, P. Noll: "Digital coding of waveforms", Prentice-Hall, 1984, beschrieben ist. Dieser Quantisierer läßt das bei der Quantisierung verwendete Quantisierungsintervall unverändert, verschiebt aber den quantisierten Wert, also den Repräsentanten des Quantisierungsintervalls und damit die Interpretation der übertragenen Bits um einen gewissen Wert. Eine Verschiebung zur Mitte des Quantisierungsintervalls wird beispielsweise dann erreicht, wenn für die fehlenden Bits das Bitmuster "1 0 0 0 ... " eingesetzt wird. Allgemein wird es bevorzugt, für die fehlenden niederwertigen Bits eines Spektralwerts im Quantisierer zur Rekonstruktion Bitmuster einzusetzen, die sich von dem "Abrundungsbitmuster", das durch "0 0 0 ... " dargestellt ist, unterscheiden. In anderen Worten bedeutet dies, daß das Rekonstruktionsbitmuster zumindest eine "1" umfaßt und vorzugsweise daß das höchstwertige Bit des Rekonstruktionsbitmusters eine "1" ist.

Im nachfolgenden wird auf die Funktionsweise des in Fig. 6 gezeigten Codierers und des in Fig. 7 gezeigten Decodierers eingegangen, die als bevorzugten Transformationsalgorithmus die IntMDCT umfassen. Das IntMDCT-Spektrum liefert eine ganzzahlige spektrale Darstellung des Audiosignals. Parallel hierzu berechnet das psychoakustische Modell im in Fig. 6 gezeigten Codierer die Mithörschwelle. Die Mithörschwelle ist, wie es bereits ausgeführt worden ist, aufgrund des kontinuierlichen Verlaufs effizient codierbar und im Bitstrom übertragbar, beispielsweise durch Koeffizienten eines FIR-Filters oder durch polynominale Interpolation.

Aus der Mithörschwelle ergibt sich für jede Spektrallinie die Anzahl der Bits, die psychoakustisch nicht signifikant sind, also die Bits der Spektralwerte, deren Ordnung geringer ist als die Ordnung des MSB der Mithörschwelle für diesen Spektralwert. Auf Fig. 3 bezogen sind dies die Bits unterhalb den dick umrandeten Kästen.

Jeder Betragswert der Integer-Spektralwerte wird bitweise dargestellt, um dann mittels der Einrichtung 604 entlang des Frequenzbereichs Bitschichten gleicher psychoakustischer Signifikanz, beispielsweise parallel zur Schicht der gerade noch psychoakustisch signifikanten Bits, zu definieren, wobei eine Präferenz niedriger Frequenzen in den signifikanteren Schichten bevorzugt wird. Die Bits werden entlang der Signifikanzschichten geordnet, wobei mit dem signifikantesten Bit begonnen wird. Die Startschicht ergibt sich entweder aus den theoretischen Maximalwerten oder aus einer effizient codierten spektralen Einhüllenden, analog zur codierten Mithörschwelle, oder aus einer Parallelverschiebung der Mithörschwelle, wie z. B. um 30 dB, was also fünf Bits entsprechen würde.

In den Schichten hoher Signifikanz ist ein Auftreten von "1" sehr unwahrscheinlich, da nur wenige Spektrallinien weit aus der Mithörschwelle herausragen, wie z. B. die Spektrallinie 5 von Fig. 2 oder Fig. 3. Zu niedrigeren Schichten hin steigt die Wahrscheinlichkeit für eine "1" an und nähert sich 50 %. Auf eine derart angeordnete Bitfolge wird es bevorzugt, die bitweise arithmetische Codierung zur Redundanzreduktion anzuwenden.

Bei einem Aspekt der vorliegenden Erfindung wird der Skalierbarkeitsbereich nicht nur, wie in MPEG-4 BSAC, bis zur psychoakustischen Transparenz erweitert, sondern bis zur verlustlosen Codierung/Decodierung. Werden die gesamte codierte Bitfolge und bei entsprechender Darstellung auch die zugehörigen Vorzeichen der Spektralwerte übertragen, so arbeitet das Ausführungsbeispiel verlustlos. Wird nur ein Teil der codierten Bitfolge übertragen, so ergibt sich bereits eine Irrelevanzreduktion. Wird die codierte Bitfolge jedoch bis zur Schicht der gerade noch signifikanten Bits übertragen, so arbeitet das Verfahren im gerade noch transparentem Modus. Werden weniger Bits übertragen, so ergibt sich eine Reduktion der Bitrate, die jedoch auch mit einer Reduktion der Audio/Videoqualität einhergeht.

Werden zusätzlich zu den psychoakustisch signifikanten Schichten weitere Schichten übertragen, so wird das Audiosignal (Videosignal) mit zusätzlichem Sicherheitsabstand zur Verdeckungsschwelle dargestellt und ermöglicht so eine nahezu verlustlose Darstellung mit einer großen Robustheit gegenüber Nachbearbeitungsschritten.

Die Zahl der nötigen Bits zum Erreichen von Transparenz variiert von Block zu Block. Wird diese Information im vollständigen, verlustlosen Bitstrom mitcodiert, so läßt sich diese Information für die Steuerung der. Bitzuteilung zum Erreichen einer konstanten Bitrate nutzen. Diese Information liegt exakt vor und kann für jede gewünschte konstante Bitrate verwendet werden. So läßt sich aus dem vollständigen, verlustlos codierten Bitstrom für jede vorgegebene konstante Bitrate ein gehörangepaßt codierter Teilbitstrom entnehmen, der die Funktionalität der lokal variierenden Bitrate nutzt.

Schließlich ermöglicht eine Übertragung der zum Erreichen von Transparenz nötigen Bitschichten in den Seiteninformationen eine Kontrolle über die aktuelle im Teilbitstrom übertragene Audioqualität, indem dieser Wert mit der Zahl der tatsächlich übertragenen Bitschichten verglichen wird.

Im nachfolgenden wird als Beispiel für einen ganzzahligen Transformationsalgorithmus auf den IntMDCT-Transformationsalgorithmus eingegangen, der in "Audio Coding Based on Integer Transforms" 111-te AES-Versammlung, New York, 2001, beschrieben ist. Die IntMDCT ist besonders günstig, da sie die attraktiven Eigenschaften der MDCT hat, wie z. B. eine gute spektrale Darstellung des Audiosignals, eine kritische Abtastung und eine Blocküberlappung aufweist.

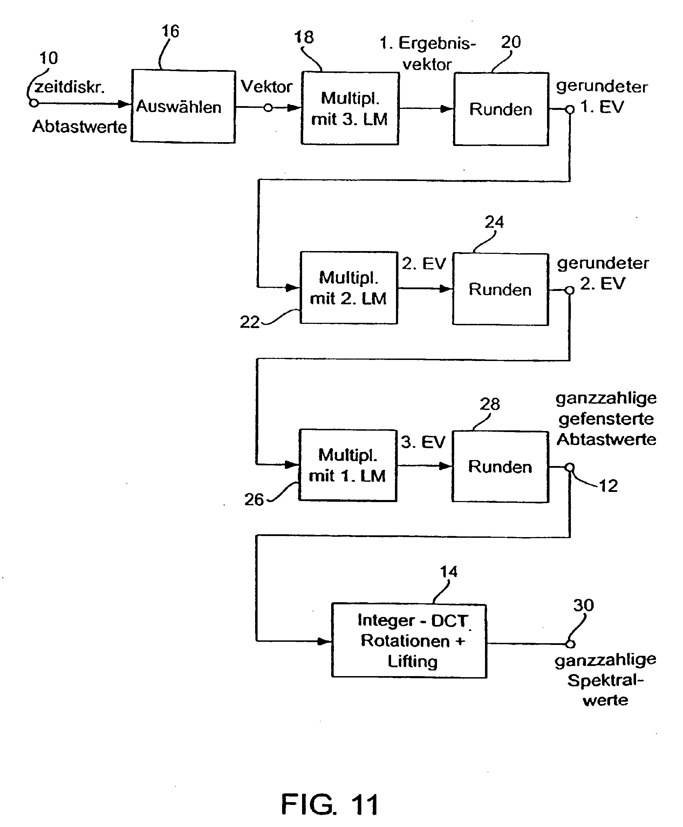

Fig. 11 zeigt ein Übersichtsdiagramm für die erfindungsgemäß bevorzugte Vorrichtung zum Verarbeiten von zeitdiskreten Abtastwerten, die ein Audiosignal darstellen, um ganzzahlige Werte zu erhalten, auf denen aufbauend der IntMDCT-Ganzzahl-Transformationsalgorithmus arbeitet. Die zeitdiskreten Abtastwerte werden durch die in. Fig. 11 gezeigte Vorrichtung gefenstert und optional in eine spektrale Darstellung umgesetzt. Die zeitdiskreten Abtastwerte, die an einem Eingang 10 in die Vorrichtung eingespeist werden, werden mit einem Fenster w mit einer Länge, die 2N zeitdiskreten Abtastwerten entspricht, gefenstert, um an einem Ausgang 12 ganzzahlige gefensterte Abtastwerte zu erreichen, welche dazu geeignet sind, um mittels einer Transformation und insbesondere der Einrichtung 14 zum Ausführen einer ganzzahligen DCT in eine spektrale Darstellung umgesetzt zu werden. Die ganzzahlige DCT ist ausgebildet, um aus N Eingangswerten N Ausgangswerte zu erzeugen, was im Gegensatz zu der MDCT-Funktion 408 von Fig. 10a steht, die aus 2N gefensterten Abtastwerten aufgrund der MDCT-Gleichung lediglich N Spektralwerte erzeugt.

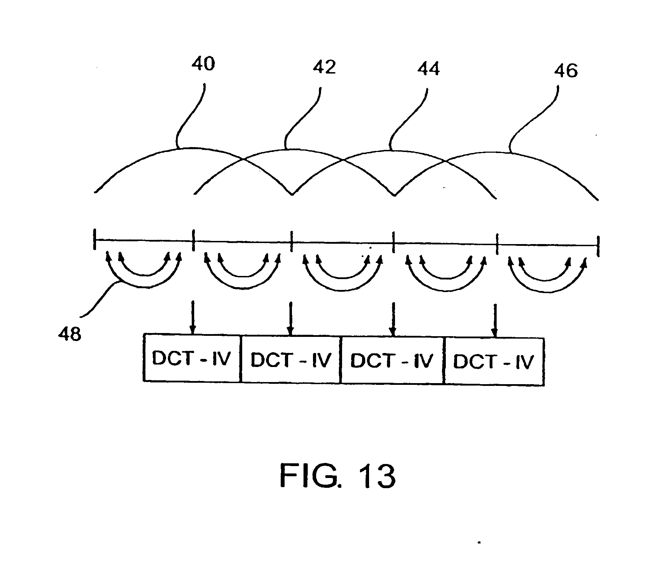

Zum Fenstern der zeitdiskreten Abtastwerte werden zunächst in einer Einrichtung 16 zwei zeitdiskrete Abtastwerte ausgewählt, die zusammen einen Vektor von zeitdiskreten Abtastwerten darstellen. Ein zeitdiskreter Abtastwert, der durch die Einrichtung 16 ausgewählt wird, liegt im ersten Viertel des Fensters. Der andere zeitdiskrete Abtastwert liegt in dem zweiten Viertel des Fensters, wie es anhand von Fig. 13 noch detaillierter ausgeführt wird. Der durch die Einrichtung 16 erzeugte Vektor wird nunmehr mit einer Drehmatrix der Dimension 2 x 2 beaufschlagt, wobei diese Operation nicht unmittelbar durchgeführt wird, sondern mittels mehrerer sogenannten Lifting-Matrizen.

Eine Lifting-Matrix hat die Eigenschaft, daß sie nur ein Element aufweist, das von dem Fenster w abhängt und ungleich "1" oder "0" ist.

Die Faktorisierung von Wavelet-Transformationen in Lifting-Schritte ist in der Fachveröffentlichung "Factoring Wavelet Transforms Into Lifting Steps", Ingrid Daubechies und Wim Sweldens, Preprint, Bell Laboratories, Lucent Technologies, 1996, dargestellt. Allgemein ist ein Lifting-Schema eine einfache Beziehung zwischen perfekt rekonstruierenden Filterpaaren, die dasselbe Tiefpaß- oder Hochpaßfilter haben. Jedes Paar komplementärer Filter kann in Lifting-Schritte faktorisiert werden. Insbesondere gilt dies für Givens-Rotationen. Es sei der Fall betrachtet, bei dem die Polyphasenmatrix eine Givens-Rotation ist. Es gilt dann:

$$\begin{pmatrix} \cos\alpha & -\sin\alpha \\ \sin\alpha & \cos\alpha \end{pmatrix} = \begin{pmatrix} 1 & \frac{\cos\alpha-1}{\sin\alpha} \\ 0 & 1 \end{pmatrix}\begin{pmatrix} 1 & 0 \\ \sin\alpha & 1 \end{pmatrix}\begin{pmatrix} 1 & \frac{\cos\alpha-1}{\sin\alpha} \\ 0 & 1 \end{pmatrix} \qquad (1)$$

Jede der drei rechts des Gleichheitszeichens stehenden Lifting-Matrizen hat als Hauptdiagonalelemente den Wert "1". Ferner ist in jeder Lifting-Matrix ein Nebendiagonalelement gleich 0, und ein Nebendiagonalelement vom Drehwinkel $\alpha$ abhängig.

Der Vektor wird nunmehr mit der dritten Lifting-Matrix, d. h. der Liftingmatrix ganz rechts in obiger Gleichung, multipl i ziert, um einen ersten Ergebnisvektor zu erhalten. Dies ist in Fig. 11 durch eine Einrichtung 18 dargestellt. Es wird nunmehr der erste Ergebnisvektor mit einer beliebigen Rundungsfunktion, die die Menge der reellen Zahlen in die Menge der ganzen Zahlen abbildet, gerundet, wie es in Fig. 11 durch eine Einrichtung 20 dargestellt ist. Am Ausgang der Einrichtung 20 wird ein gerundeter erster Ergebnisvektor erhalten. Der gerundete erste Ergebnisvektor wird nunmehr in eine Einrichtung 22 zum Multiplizieren desselben mit der mittleren, d. h. zweiten, Lifting-Matrix eingespeist, um einen zweiten Ergebnisvektor zu erhalten, der in einer Einrichtung 24 wiederum gerundet wird, um einen gerundeten zweiten Ergebnisvektor zu erhalten. Der gerundete zweite Ergebnisvektor wird nunmehr in eine Einrichtung 26 eingespeist, und zwar zum Multiplizieren desselben mit der links in der obigen Gleichung aufgeführten, d. h. ersten, Liftingmatrix, um einen dritten Ergebnisvektor zu erhalten, der schließlich noch mittels einer Einrichtung 28 gerundet wird, um schließlich an dem Ausgang 12 ganzzahlige gefensterte Abtastwerte zu erhalten, die nun, wenn eine spektrale Darstellung derselben gewünscht wird, durch die Einrichtung 14 verarbeitet werden müssen, um an einem Spektralaus - gang 30 ganzzahlige Spektralwerte zu erhalten.

Vorzugsweise ist die Einrichtung 14 als Ganzzahl-DCT oder Integer-DCT ausgeführt.

Die diskrete Cosinus-Transformation gemäß Typ 4 (DCT-IV) mit einer Länge N ist durch folgende Gleichung gegeben:

$$X_t(m) = \sqrt{\frac{2}{N}}\sum_{k=0}^{N-1} x(k)\cos\left(\frac{\pi}{4N}(2k+1)(2m+1)\right) \qquad (2)$$

Die Koeffizienten der DCT-IV bilden eine orthonormale N x N Matrix. Jede orthogonale N x N-Matrix kann in N (N-1)/2 Givens-Rotationen zerlegt werden, wie es in der Fachveröffentlichung P. P. Vaidyanathan, "Multirate Systems And Filter Banks", Prentice Hall, Englewood Cliffs, 1993, ausgeführt ist. Es sei darauf hingewiesen, daß auch weitere Zerlegungen existieren.

Bezüglich der Klassifikationen der verschiedenen DCT-Algorithmen sei auf H. S. Malvar, "Signal Processing With Lapped Transforms", Artech House, 1992, verwiesen. Allgemein unterscheiden sich die DCT-Algorithmen durch die Art ihrer Basisfunktionen. Während die DCT-IV, die hier bevorzugt wird, nicht-symmetrische Basisfunktionen umfaßt, d. h. eine Cosinus-Viertelwelle, eine Cosinus-3/4-Welle, eine Cosinus-5/4-Welle, eine Cosinus-7/4-Welle, etc., hat die diskrete Cosinustransformation z. B. vom Typ II (DCT-II), achsensymmetrische und punktsymmetrische Basisfunktionen. Die 0-te Basisfunktion hat einen Gleichanteil, die erste Basisfunktion ist eine halbe Cosinuswelle, die zweite Basisfunktion ist eine ganze Cosinuswelle, usw. Aufgrund der Tatsache, daß die DCT-II den Gleichanteil besonders berücksichtigt, wird sie bei der Videocodierung verwendet, nicht aber bei der Audiocodierung, da bei der Audiocodierung im Gegensatz zur Videocodierung der Gleichanteil nicht von Relevanz ist.

Im nachfolgend wird darauf eingegangen, wie der Drehwinkel $\alpha$ der Givens-Rotation von der Fensterfunktion abhängt.

Eine MDCT mit einer Fensterlänge von 2N kann in eine diskrete Cosinustransformation vom Typ IV mit einer Länge N reduziert werden. Dies wird dadurch erreicht, daß die TDAC-Operation explizit im Zeitbereich durchgeführt wird, und daß dann die DCT-IV angewandt wird. Bei einer 50%igen Überlappung überlappt die linke Hälfte des Fensters für einen Block t mit der rechten Hälfte des vorausgehenden Blocks, d. h. des Blocks t-1. Der überlappende Teil zwei aufeinanderfolgender Blöcke t-1 und t wird im Zeitbereich, d. h. vor der Transformation, folgendermaßen vorverarbeitet, d. h. zwischen dem Eingang 10 und dem Ausgang 12 von Fig. 11 verarbeitet:

$$\begin{pmatrix} \tilde{x}_t(k) \\ \tilde{x}_{t-1}(N-1-k) \end{pmatrix} = \begin{pmatrix} w\left(\frac{N}{2}+k\right) & -w\left(\frac{N}{2}-1-k\right) \\ w\left(\frac{N}{2}-1-k\right) & w\left(\frac{N}{2}+k\right) \end{pmatrix} \begin{pmatrix} x_t\left(\frac{N}{2}+k\right) \\ x_t\left(\frac{N}{2}-1-k\right) \end{pmatrix} \quad (3)$$

Die mit der Tilde bezeichneten Werte sind die Werte am Ausgang 12 von Fig. 11, während die ohne Tilde in der obigen Gleichung bezeichnete x Werte die Werte am Eingang 10 bzw. hinter der Einrichtung 16 zum Auswählen sind. Der Laufindex k läuft von 0 bis N/2-1, während w die Fensterfunktion darstellt.

Aus der TDAC-Bedingung für die Fensterfunktion w gilt folgender Zusammenhang:

$$w\left(\frac{N}{2}+k\right)^2 + w\left(\frac{N}{2}-1-k\right)^2 = 1 \quad (4)$$

Für bestimmte Winkel $\alpha_k$, k = 0, ..., N/2-1 kann diese Vorverarbeitung im Zeitbereich als Givens-Rotation geschrieben werden, wie es ausgeführt worden ist.

Der Winkel $\alpha$ der Givens-Rotation hängt folgendermaßen von der Fensterfunktion w ab:

$$\alpha = \arctan[w(N/2-1-k) / w(N/2+k)] \quad (5)$$

Es sei darauf hingewiesen, daß beliebige Fensterfunktionen w eingesetzt werden können, solange sie diese TDAC-Bedingung erfüllen.

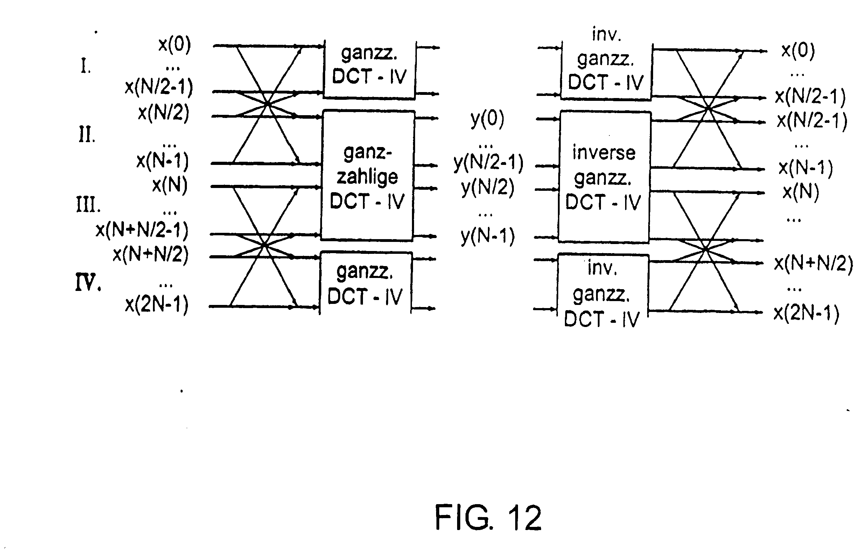

Im nachfolgenden wird anhand von Fig. 12 ein kaskadierter Codierer und Decodierer beschrieben. Die zeitdiskreten Abtastwerte x(0) bis x(2N-1), die durch ein Fenster gemeinsam "gefenstert" werden, werden zunächst derart durch die Einrichtung 16 von Fig. 11 ausgewählt, daß der Abtastwert x(0) und der Abtastwert x(N-1), d. h. ein Abtastwert aus dem ersten Viertel des Fensters und ein Abtastwert aus dem zweiten Viertel des Fensters, ausgewählt werden, um den Vektor am Ausgang der Einrichtung 16 zu bilden. Die sich überkreuzenden Pfeile stellen schematisch die Lifting-Multiplikationen und anschließenden Rundungen der Einrichtungen 18, 20 bzw. 22, 24 bzw. 26, 28 dar, um am Eingang der DCT-IV-Blöcke die ganzzahligen gefensterten Abtastwerte zu erhalten.

Wenn der erste Vektor wie oben beschrieben verarbeitet ist, wird ferner ein zweiter Vektor aus den Abtastwerten x(N/2-1) und x(N/2), d. h. wieder ein Abtastwert aus dem ersten Viertel des Fenster und ein Abtastwert aus dem zweiten Viertel des Fensters, ausgewählt und wiederum durch den in Fig. 11 beschriebenen Algorithmus verarbeitet. Analog dazu werden sämtliche anderen Abtastwertpaare aus dem ersten und zweiten Viertel des Fensters bearbeitet. Die selbe Verarbeitung wird für das dritte und vierte Viertel des ersten Fensters durchgeführt. Nunmehr liegen am Ausgang 12 2N gefensterte ganzzahlige Abtastwerte vor, die nunmehr so, wie es in Fig. 12 dargestellt ist, in eine DCT-IV-Transformation eingespeist werden. Insbesondere werden die ganzzahligen gefensterten Abtastwerte des zweiten und dritten Viertels in eine DCT eingespeist. Die gefensterten ganzzahligen Abtastwerte des ersten Viertels des Fensters werden in eine vorausgehende DCT-IV zusammen mit den gefensterten ganzzahligen Abtastwerten des vierten Viertels des vorausgehenden Fensters verarbeitet. Analog dazu wird das vierte Viertel der gefensterten ganzzahligen Abtastwerte in Fig. 12 mit dem ersten Viertel des nächsten Fensters zusammen in eine DCT-IV-Transformation eingespeist. Die mittlere in Fig. 12 gezeigte ganzzahlige DCT-IV-Transformation 32 liefert nunmehr N ganzzahlige Spektralwerte y(0) bis y(N-1). Diese ganzzahligen Spektralwerte können nunmehr beispielsweise einfach Entropie-codiert werden, ohne daß eine dazwischenliegende Quantisierung erforderlich ist, da die Fensterung und Transformation ganzzahlige Ausgangswerte liefert.

In der rechten Hälfte von Fig. 12 ist ein Decodierer dargestellt. Der Decodierer bestehend aus Rücktransformation und "inverser Fensterung" arbeitet invers zum Codierer. Es ist bekannt, daß zur Rücktransformation einer DCT-IV eine inverse DCT-IV verwendet werden kann, wie es in Fig. 12 dargestellt ist. Die Ausgangswerte der Decodierer-DCT-IV 34 werden nunmehr, wie es in Fig. 12 dargestellt ist, mit den entsprechenden Werten der vorausgehenden Transformation bzw. der nachfolgenden Transformation invers verarbeitet, um aus den ganzzahligen gefensterten Abtastwerten am Ausgang der Einrichtung 34 bzw. der vorausgehenden und nachfolgenden Transformation wieder zeitdiskrete Audio-Abtastwerte x(0) bis x(2N-1) zu erzeugen.

Die ausgangsseitige Operation geschieht durch eine inverse Givens-Rotation, d. h. derart, daß die Blöcke 26, 28 bzw. 22, 24 bzw. 18, 20 in der entgegengesetzten Richtung durchlaufen werden. Dies sei anhand der zweiten Lifting-Matrix von Gleichung 1 näher dargestellt. Wenn (im Codierer) der zweite Ergebnisvektor durch Multiplikation des gerundeten ersten Ergebnisvektors mit der zweiten Liftingmatrix (Einrichtung 22) gebildet wird, so ergibt sich folgender Ausdruck:

$$(x, y) \mapsto (x, y + x \sin \alpha) \qquad (6)$$

Die Werte x, y auf der rechten Seite von Gleichung 6 sind Ganzzahlen. Dies trifft jedoch für den Wert x sin $\alpha$ nicht zu. Hier muß die Rundungsfunktion r eingeführt werden, wie es in der nachfolgenden Gleichung

$$(x, y) \mapsto (x, y + r(x \sin \alpha)) \qquad (7)$$

dargestellt ist. Diese Operation führt die Einrichtung 24 aus.

Die inverse Abbildung (im Decodierer) ist folgendermaßen definiert:

$$(x', y') \mapsto (x', y' - r(x' \sin \alpha)) \qquad (8)$$

Aufgrund dem Minuszeichen vor der Rundungsoperation wird ersichtlich, daß die ganzzahlige Approximierung des Lifting-Schritts umgekehrt werden kann, ohne daß ein Fehler eingeführt wird. Die Anwendung dieser Approximation auf jeden der drei Lifting-Schritte führt zu einer ganzzahligen Approximation der Givens-Rotation. Die gerundete Rotation (im Codierer) kann umgekehrt werden (im Decodierer), ohne daß ein Fehler eingeführt wird, und zwar indem die inversen gerundeten Lifting-Schritte in umgekehrter Reihenfolge durchlaufen werden, d. h. wenn beim Decodieren der Algorithmus von Fig. 11 von unten nach oben durchgeführt wird.

Wenn die Rundungsfunktion r punktsymmetrisch ist, ist die inverse gerundete Rotation identisch zu der gerundeten Rotation mit dem Winkel -$\alpha$ und lautet folgendermaßen:

$$\begin{pmatrix} \cos \alpha & \sin \alpha \\ -\sin \alpha & \cos \alpha \end{pmatrix} \qquad (9)$$

Die Lifting-Matrizen für den Decodierer, d. h. für die inverse Givens-Rotation, ergibt sich in diesem Fall unmittelbar aus Gleichung (1), indem lediglich der Ausdruck "sin $\alpha$" durch den Ausdruck "-sin $\alpha$" ersetzt wird.

Im nachfolgenden wird anhand von Fig. 13 noch einmal die Zerlegung einer üblichen MDCT mit überlappenden Fenstern 40 bis 46 dargelegt. Die Fenster 40 bis 46 überlappen jeweils zu 50%. Pro Fenster werden zunächst Givens-Rotationen innerhalb des ersten und zweiten Viertels eines Fensters bzw. innerhalb des dritten und vierten Viertels eines Fensters ausgeführt, wie es durch die Pfeile 48 schematisch dargestellt ist. Dann werden die rotierten Werte, d. h. die gefensterten ganzzahligen Abtastwerte derart in eine N-zu-N-DCT eingespeist, daß immer das zweite und dritte Viertel eines Fensters bzw. das vierte und erste Viertel eines darauffolgenden Fensters gemeinsam mittels eines DCT-IV-Algorithmus in eine spektrale Darstellung umgesetzt wird.

Es werden daher die üblichen Givens-Rotation in Lifting-Matrizen zerlegt, die sequentiell ausgeführt werden, wobei nach jeder Lifting-Matrix-Multiplikation ein Rundungsschritt eingeführt wird, derart, daß die Gleitkomma-Zahlen unmittelbar nach ihrer Entstehung gerundet werden, derart, daß vor jeder Multiplikation eines Ergebnisvektors mit einer Lifting-Matrix der Ergebnisvektor lediglich Ganzzahlen hat.

Die Ausgangswerte bleiben also immer ganzzahlig, wobei es bevorzugt wird, auch ganzzahlige Eingangswerte zu verwenden. Dies stellt keine Einschränkung dar, da jegliche beispielsweise PCM-Abtastwerte, wie sie auf einer CD abgespeichert sind, ganzzahlige Zahlenwerte sind, deren Wertebereich je nach Bitbreite variiert, d. h. abhängig davon, ob die zeitdiskreten digitalen Eingangswerte 16-Bit-Werte oder 24-Bit-Werte sind. Dennoch ist, wie es ausgeführt worden ist, der gesamte Prozeß invertierbar, indem die inversen Rotationen in umgekehrter Reihenfolge ausgeführt werden. Es existiert somit eine ganzzahlige Approximation der MDCT mit perfekter Rekonstruktion, also eine verlustlose Transformation.

Die gezeigte Transformation liefert ganzzahlige Ausgangswerte statt Gleitkommawerte. Sie liefert eine perfekte Rekonstruktion, so daß kein Fehler eingeführt wird, wenn eine Vorwärts- und dann eine Rückwärtstransformation ausgeführt werden. Die Transformation ist gemäß einem bevorzugten Ausführungsbeispiel der vorliegenden Erfindung ein Ersatz für die modifizierte diskrete Cosinustransformation. Auch andere Transformationsverfahren können jedoch ganzzahlig ausgeführt werden, so lange eine Zerlegung in Rotationen und eine Zerlegung der Rotationen in Lifting-Schritte möglich ist.

Die ganzzahlige MDCT hat die meisten günstigen Eigenschaften der MDCT. Sie hat eine überlappende Struktur, wodurch eine bessere Frequenzselektivität als bei nicht-überlappenden Blocktransformationen erhalten wird. Aufgrund der TDAC-Funktion, die bereits beim Fenstern vor der Transformation berücksichtigt wird, wird eine kritische Abtastung beibehalten, so daß die Gesamtanzahl von Spektralwerten, die ein Audiosignal darstellen, gleich der Gesamtanzahl von Eingangs-Abtastwerten ist.

Verglichen mit einer normalen MDCT, die Gleitkomma-Abtastwerte liefert, zeigt sich bei der beschriebenen bevorzugten ganzzahligen Transformation, daß lediglich in dem Spektralbereich, in dem wenig Signalpegel ist, das Rauschen im Vergleich zur normalen MDCT erhöht ist, während sich diese Rauscherhöhung bei signifikanten Signalpegeln nicht bemerkbar macht. Dafür bietet sich die ganzzahlige Verarbeitung für eine effiziente Hardware-Implementation an, da lediglich Multiplikationsschritte verwendet werden, die ohne weiteres in Verschieben-Addieren-Schritte (Shift/Add-Schritte) zerlegt werden können, welche einfach und schnell hardwaremäßig implementiert werden können. Selbstverständlich ist auch eine Software-Implementation möglich.

Die ganzzahlige Transformation liefert eine gute spektrale Darstellung des Audiosignals und bleibt dennoch im Bereich der ganzen Zahlen. Wenn sie auf tonale Teile eines Audiosignals angewandt wird, resultiert dies in einer guten Energiekonzentrierung. Damit kann ein effizientes verlustloses Codierschema aufgebaut werden, indem einfach die in Fig. 11 dargestellte Fensterung/Transformation mit einem Entropiecodierer kaskadiert wird. Insbesondere ein gestapeltes Codieren (Stacked Coding) unter Verwendung von Escape-Werten, wie es in MPEG AAC eingesetzt wird, ist günstig. Es wird bevorzugt, alle Werte um eine bestimmte Potenz von zwei herunterzuskalieren, bis sie in eine erwünschte Codetabelle passen, und dann die weggelassenen niederstwertigen Bits zusätzlich zu codieren. Im Vergleich zu der Alternative der Verwendung von größeren Codetabellen ist die beschriebene Alternative hinsichtlich des Speicherverbrauchs zum Speichern der Codetabellen günstiger. Ein nahezu verlustloser Codierer könnte auch dadurch erhalten werden, daß einfach bestimmte der niederstwertigen Bits weggelassen werden.

Insbesondere für tonale Signale ermöglicht eine Entropie-Codierung der ganzzahligen Spektralwerte einen hohen Codiergewinn. Für transiente Teile des Signals ist der Codiergewinn niedrig, und zwar aufgrund des flachen Spektrums transienter Signale, d. h. aufgrund einer geringen Anzahl von Spektralwerten, die gleich oder nahezu 0 sind. Wie es in J. Herre, J. D. Johnston: "Enhancing the Performance of Perceptual Audio Coders by Using Temporal Noise Shaping (TNS)" 101. AES Convention, Los Angeles, 1996, Preprint 4384, beschrieben ist, kann diese Flachheit jedoch verwendet werden, indem eine lineare Prädiktion im Frequenzbereich verwendet wird. Eine Alternative ist eine Prädiktion mit offener Schleife. Eine andere Alternative ist der Prädiktor mit geschlossener Schleife. Die erste Alternative, d. h. der Prädiktor mit offener Schleife, wird TNS genannt. Die Quantisierung nach der Prädiktion führt zu einer Adaption des resultierenden Quantisierungsrauschens an die zeitliche Struktur des Audiosignals und verhindert daher Vorechos in psychoakustischen Audiocodierern. Für ein verlustloses Audiocodieren ist die zweite Alternative, d. h. mit einem Prädiktor mit geschlossener Schleife, geeigneter, da die Prädiktion mit geschlossener Schleife eine genaue Rekonstruktion des Eingangssignals erlaubt. Wenn diese Technik auf ein erzeugtes Spektrum angewendet wird, muß ein Rundungsschritt nach jedem Schritt des Prädiktionsfilters durchgeführt werden, um im Bereich der Ganzzahlen zu bleiben. Durch Verwenden des inversen Filters und derselben Rundungsfunktion kann das ursprüngliche Spektrum genau wieder hergestellt werden.

Um die Redundanz zwischen zwei Kanälen zur Datenreduktion auszunutzen, kann auch eine Mitte-Seite-Codierung verlustlos eingesetzt werden, wenn eine gerundete Rotation mit einem Winkel n/4 verwendet wird. Im Vergleich zur Alternative des Berechnens der Summe und Differenz des linken und rechten Kanals eines Stereosignals hat die gerundete Rotation den Vorteil der Energieerhaltung. Die Verwendung sogenannter Joint-Stereo-Codiertechniken kann für jedes Band ein- oder ausgeschaltet werden, wie es auch im Standard MPEG AAC durchgeführt wird. Weitere Drehwinkel können ebenfalls berücksichtigt werden, um eine Redundanz zwischen zwei Kanälen flexibler reduzieren zu können.

Je nach den praktischen Gegebenheiten kann das erfindungsgemäße Codierkonzept bzw. das erfindungsgemäße Decodierkonzept in Hardware oder in Software implementiert werden. Die Implementierung kann auf einem digitalen Speichermedium, insbesondere einer Diskette oder CD mit elektronisch aus-lesbaren Steuersignalen erfolgen, die so mit einem programmierbaren Computersystem zusammenwirken können, daß das entsprechende Verfahren ausgeführt wird. Allgemein besteht die Erfindung somit auch in einem Computerprogrammprodukt mit einem auf einem maschinenlesbaren Träger gespeicherten Programmcode zur Durchführung des erfindungsgemäßen Codierverfahrens oder des erfindungsgemäßen Decodierverfahrens, wenn das Computerprogrammprodukt auf einem Rechner abläuft. In anderen Worten ausgedrückt stellt die Erfindung somit ein Computerprogramm mit einem Programmcode zur Durchführen des Verfahrens zum Decodieren bzw. zum Durchführen des Verfahrens zum Codieren dar, wenn das Computerprogramm auf einem Computer abläuft.

## Patentansprüche

1. Vorrichtung zum skalierbaren Codieren eines Spektrums eines Signals, das Audio- und/oder Videoinformationen umfaßt, wobei das Spektrum binäre Spektralwerte aufweist, mit folgenden Merkmalen:

    einer Einrichtung (102) zum Erzeugen einer ersten Teilskalierungsschicht unter Verwendung von Bits bestimmter Ordnung einer ersten Anzahl der binären Spektralwerte in einem Band, wobei die erste Anzahl größer oder gleich 1 ist und kleiner als eine Gesamtanzahl der binären Spektralwerte in dem Band ist, und zum Erzeugen einer zweiten Teilskalierungsschicht unter Verwendung von Bits der bestimmten Ordnung einer zweiten Anzahl der binären Spektralwerte, wobei die Einrichtung (102) zum Erzeugen ausgebildet ist, um die zweite Anzahl der binären Spektralwerte so zu wählen, daß sie größer oder gleich 1 und kleiner als die Gesamtanzahl der binären Spektralwerte in dem Band ist, und um die zweite Anzahl der Spektralwerte ferner so zu bestimmen, daß sie zumindest einen binären Spektralwert aufweist, der in der ersten Anzahl von binären Spektralwerten nicht enthalten ist; und
    einer Einrichtung (106) zum Bilden eines codierten Signals, wobei die Einrichtung zum Bilden ausgebildet ist, um die erste Teilskalierungsschicht und die zweite Teilskalierungsschicht so in das codierte Signal aufzunehmen, daß die erste und die zweite Teilskalierungsschicht (113a, 113b) getrennt voneinander decodierbar sind.

2. Vorrichtung gemäß Anspruch 1, die ferner folgende Merkmale aufweist:

    eine Einrichtung zum Erzeugen einer Vollskalierungsschicht unter Verwendung von allen Bits mit einer Ordnung, die sich von der bestimmten Ordnung unterscheidet, in dem Band, und
    wobei die Einrichtung zum Bilden (106) ferner ausgebildet ist, um die Vollskalierungsschicht so in dem Bitstrom aufzunehmen, daß sie unabhängig von der ersten und der zweiten Teilskalierungsschicht (113a, 113b) decodierbar ist.

3. Vorrichtung gemäß Anspruch 1 oder 2, bei der die binären Spektralwerte quantisiert sind, wobei die Vorrichtung ferner folgende Merkmale aufweist:

    eine Einrichtung (84) zum Berechnen von Ordnungen von höchstwertigen Bits einer psychoakustischen Maskierungsschwelle für die Bänder; und
    eine Einrichtung (604) zum Definieren von Skalierungsschichten der Bits der binären Spektralwerte, wobei eine Skalierungsschicht Bits der binären Spektralwerte aufweist, deren Ordnungen in einem bestimmten Abstand zu den Ordnungen der höchstwertigen Bits der psychoakustischen Maskierungsschwelle für die Bänder liegen oder deren Ordnungen gleich den Ordnungen der höchstwertigen Bits der psychoakustischen Maskierungsschwelle für diese Bänder sind.

**4.** Vorrichtung gemäß Anspruch 3,
bei der die Einrichtung (102) zum Erzeugen der ersten und der zweiten Teilskalierungsschicht (113a, 113b) ausgebildet ist, um als Bits bestimmter Ordnung die Bits der binären Spektralwerte zu verwenden, deren Abstand zu der Ordnung des höchstwertigen Bits der psychoakustischen Maskierungsschwelle in dem Band gleich "+1", "0" und/oder "-1" ist.

**5.** Vorrichtung gemäß Anspruch 3 oder 4,
bei der die Einrichtung (84) zum Berechnen der Ordnungen von höchstwertigen Bits der psychoakustischen Maskierungsschwelle ausgebildet ist, um für jeden Spektralwert in dem Band eine Ordnung eines höchstwertigen Bits zu bestimmen, oder um eine Ordnung eines höchstwertigen Bits der psychoakustischen Maskierungsschwelle für das gesamte Band zu bestimmen.

**6.** Vorrichtung gemäß einem der Ansprüche 3 bis 5, bei der die Einrichtung (106) zum Bilden ferner ausgebildet ist, um Informationen über die psychoakustische Maskierungsschwelle als Seiteninformationen (110) in das codierte Signal aufzunehmen.

**7.** Vorrichtung gemäß einem der vorhergehenden Ansprüche,
bei der die erste Teilskalierungsschicht vor der zweiten Teilskalierungsschicht decodierbar ist, und
bei der die Einrichtung (102) zum Erzeugen der ersten und der zweiten Teilskalierungsschicht ausgebildet ist, um für die erste Anzahl der binären Spektralwerte den/die Spektralwerte auszuwählen, durch den/die ein größter Genauigkeitsgewinn für das Band erzielbar ist.

**8.** Vorrichtung gemäß einem der Ansprüche 1 bis 7,
bei der die erste Teilskalierungsschicht vor der zweiten Teilskalierungsschicht decodierbar ist, und
bei der die Einrichtung (102) zum Erzeugen der ersten und der zweiten Teilskalierungsschicht ausgebildet ist, um für die erste Teilskalierungsschicht den binären Spektralwert zu verwenden, der, dargestellt durch Bits in höheren Skalierungsschichten, in dem Band die größte Differenz zu einer psychoakustischen Maskierungsschwelle für den Spektralwert aufweist.

**9.** Vorrichtung gemäß einem der vorhergehenden Ansprüche,
bei der die Einrichtung (102) zum Erzeugen der ersten und der zweiten Teilskalierungsschicht ausgebildet ist, um für die erste Teilskalierungsschicht den binären Spektralwert zu verwenden, der, dargestellt durch Bits in höheren Skalierungsschichten, in dem Band der kleinste quantisierte Spektralwert ist.

**10.** Vorrichtung gemäß einem der vorhergehenden Ansprüche,
bei der die Spektralwerte durch eine Ganzzahl-MDCT aus zeitlichen Abtastwerten des Signals erzeugt worden sind.

**11.** Vorrichtung gemäß Anspruch 1 oder 2, bei der die Spektralwerte unter Verwendung eines psychoakustischen bzw. psychooptischen Modells quantisiert sind (82).

**12.** Vorrichtung gemäß Anspruch 11,
bei der die Einrichtung (102) zum Erzeugen einer ersten und einer zweiten Teilskalierungsschicht ausgebildet ist, um eine konstante bestimmte Ordnung von Bits in den Bändern zu verwenden.

**13.** Vorrichtung gemäß Anspruch 11 oder 12,
bei der die bestimmte Ordnung die niederstwertige Ordnung der Bits der quantisierten binären Spektralwerte ist.

**14.** Vorrichtung gemäß einem der vorhergehenden Ansprüche,
bei der ein Band m Spektralwerte aufweist,
wobei m größer oder gleich 2 ist, und
bei der die Einrichtung (102) zum Erzeugen der ersten und der zweiten Teilskalierungsschicht ausgebildet ist, um die erste und die zweite Anzahl von Teilskalierungsschichten so zu berechnen, daß sie höchstens gleich m sind und mindestens gleich 1 sind, wobei in dem Fall, in dem m Teilskalierungsschichten vorhanden sind, jede Teilskalierungsschicht ein Bit der bestimmten Ordnung von genau einem Spektralwert umfaßt, wobei ein Spektralwert nur in genau einer Teilskalierungsschicht für die bestimmte Ordnung vorhanden ist.

**15.** Vorrichtung gemäß Anspruch 14, bei der m gleich 4 ist.

**16.** Vorrichtung gemäß einem der vorhergehenden Ansprüche,
bei der die Einrichtung (102) zum Erzeugen der ersten und der zweiten Teilskalierungsschicht ausgebildet ist, um eine arithmetische Codierung der ersten bzw. zweiten Anzahl von Bits der quantisierten Spektralwerte der bestimmten Ordnung durchzuführen.

**17.** Vorrichtung zum skalierbaren Decodieren eines codierten Signals, das eine erste und eine zweite Teilskalierungsschicht aufweist, wobei die erste Teilskalierungsschicht Bits bestimmter Ordnung einer ersten Anzahl von binären Spektral werten in einem Band aufweist, wobei die zweite Teilskalierungsschicht Bits der bestimmten Ordnung einer zweiten Anzahl von binären Spektralwerte in dem Band aufweist, und wobei die zweite Anzahl zumindest einen Spektralwert aufweist, der in der ersten Anzahl nicht enthalten ist, mit folgenden Merkmalen:

einer Einrichtung (704) zum Extrahieren der ersten Teilskalierungsschicht aus dem codierten Signal und der zweiten Teilskalierungsschicht aus dem codierten Signal; und
einer Einrichtung zum Verarbeiten der ersten Teilskalierungsschicht und der zweiten Teilskalierungsschicht, um die Bits der bestimmten Ordnung der binären quantisierten Spektralwerte in dem Band zu ermitteln.

**18.** Vorrichtung gemäß Anspruch 17,
bei der die erste Anzahl der binären Spektralwerte für die erste Teilskalierungsschicht gewählt ist, um einen größten Genauigkeitsgewinn für ein Band zu erzielen,
wobei die Einrichtung (704) zum Extrahieren ausgebildet ist, um die erste Teilskalierungsschicht vor der zweiten Teilskalierungsschicht zu extrahieren.

**19.** Verfahren zum skalierbaren Codieren eines Spektrums eines Signals, das Audio- und/oder Videoinformationen umfaßt, wobei das Spektrum binäre Spektralwerte aufweist, mit folgenden Schritten:

Erzeugen (102) einer ersten Teilskalierungsschicht unter Verwendung von Bits bestimmter Ordnung einer ersten Anzahl der binären Spektralwerte in einem Band, wobei die erste Anzahl größer oder gleich 1 ist und kleiner als eine Gesamtanzahl der binären Spektralwerte in dem Band ist, und zum Erzeugen einer zweiten Teilskalierungsschicht unter Verwendung von Bits der bestimmten Ordnung einer zweiten Anzahl der binären Spektralwerte, wobei die Einrichtung (102) zum Erzeugen ausgebildet ist, um die zweite Anzahl der binären Spektralwerte so zu wählen, daß sie größer oder gleich 1 und kleiner als die Gesamtanzahl der binären Spektralwerte in dem Band ist, und um die zweite Anzahl der Spektralwerte ferner so zu bestimmen, daß sie zumindest einen binären Spektralwert aufweist, der in der ersten Anzahl von binären Spektralwerten nicht enthalten ist; und
Bilden (106) eines codierten Signals, wobei die Einrichtung zum Bilden ausgebildet ist, um die erste Teilskalierungsschicht und die zweite Teilskalierungsschicht so in das codierte Signal aufzunehmen, daß die erste und die zweite Teilskalierungsschicht (113a, 113b) getrennt voneinander decodierbar sind.

**20.** Verfahren zum skalierbaren Decodieren eines codierten Signals, das eine erste und eine zweite Teilskalierungsschicht aufweist, wobei die erste Teilskalierungsschicht Bits bestimmter Ordnung einer ersten Anzahl von binären Spektralwerten in einem Band aufweist, wobei die zweite Teilskalierungsschicht Bits der bestimmten Ordnung einer zweiten Anzahl von binären Spektralwerte in dem Band aufweist, und wobei die zweite Anzahl zumindest einen Spektralwert aufweist, der in der ersten Anzahl nicht enthalten ist, mit folgenden Schritten:

Extrahieren (704) der ersten Teilskalierungsschicht aus dem codierten Signal und der zweiten Teilskalierungsschicht aus dem codierten Signal; und
Verarbeiten der ersten Teilskalierungsschicht und der zweiten Teilskalierungsschicht, um die Bits der bestimmten Ordnung der binären quantisierten Spektral-werte in dem Band zu ermitteln.

**21.** Computerprogramm mit einem Programmcode zur Durchführung des Verfahrens gemäß Anspruch 19 oder Anspruch 20, wenn das Programm auf einem Computer abläuft.


**Claims**

**1.** An apparatus for scalable encoding of a spectrum of a signal including audio and/or video information, with the spectrum comprising binary spectral values, the apparatus comprising:

means (102) for generating a first sub-scaling layer using bits of a certain order of a first number of the binary spectral values in a band, with the first number being greater than or equal to 1 and less than a total number of the binary spectral values in the band, and for generating a second sub-scaling layer using bits of the certain order of a second number of the binary spectral values, with the means (102) for generating being implemented so as to select the second number of the binary spectral values, such that the number is greater than or equal to 1 and less than the total number of the binary spectral values in the band, and to further determine the second number of the spectral values, such that it comprises at least one binary spectral value which is not contained in the first number of binary spectral values; and

means (106) for forming an encoded signal, with the means for forming being implemented so as to include the first sub-scaling layer and the second sub-scaling layer into the encoded signal such that the first and the second sub-scaling layer (113a, 113b) are decodable separately from each other.

2. The apparatus in accordance with claim 1, further comprising:

means for generating a full-scaling layer using all bits with an order, which is different from the certain order, in the band, and

with the means for forming (106) being further implemented so as to include the full-scaling layer in the bit stream, such that it is decodeable independently from the first and the second sub-scaling layer (113a, 113b).

3. The apparatus in accordance with claim 1 or 2, wherein the binary spectral values are quantized, with the apparatus further comprising:

means (84) for calculating orders of most significant bits of a psycho-acoustic masking threshold for the bands; and

means (604) for defining scaling layers of the bits of the binary spectral values, with a scaling layer comprising bits of the binary spectral values, the orders of which are in a certain difference to the orders of the most significant bits of the psycho-acoustic masking threshold for the bands or the orders of which are equal to the orders of the most significant bits of the psycho-acoustic masking threshold for these bands.

4. The apparatus in accordance with claim 3, wherein the means (102) for generating the first and the second sub-scaling layers (113a, 113b) are implemented so as to use as bits of a certain order the bits of the binary spectral values, the difference of which to the order of the most significant bits of the psycho-acoustic masking threshold in the band is equal to "+1", "0" and/or "-1 ".

5. The apparatus in accordance with claim 3 or 4, wherein the means (84) for calculating the orders of the most significant bits of the psycho-acoustic masking threshold is implemented so as to determine for each spectral value in the band an order of a most significant bit or to determine an order of a most significant bit of the psycho-acoustic masking threshold for the entire band.

6. The apparatus in accordance with any of claims 3 to 5, wherein the means (106) for forming is further implemented so as to include information on the psycho-acoustic masking threshold as side information (110) into the encoded signal.

7. The apparatus in accordance with any of the preceding claims, wherein the first sub-scaling layer is decodeable prior to the second sub-scaling layer, and wherein the means (102) for generating the first and second sub-scaling layer is implemented so as to select for the first number of the binary spectral values the spectral value(s), by which a maximum precision gain for the band may be achieved.

8. The apparatus in accordance with any of claims 1 to 7, wherein the first sub-scaling layer is decodeable prior to the second sub-scaling layer, and wherein the means (102) for generating the first and the second sub-scaling layers is implemented so as to use for the first sub-scaling layer the binary spectral value which, represented by the bits in higher scaling layers, comprises the greatest difference to a psycho-acoustic masking threshold for the spectral value in the band.

9. The apparatus in accordance with any of the preceding claims, wherein the means (102) for generating the first and the second sub-scaling layers is implemented so as to use for the first sub-scaling layer the binary spectral value which, represented by bits in higher scaling layers, is the smallest quantized spectral value in the band.

**10.** The apparatus in accordance with any of the preceding claims,
wherein the spectral values have been generated by an integer MDCT from time-sampled values of the signal.

**11.** The apparatus in accordance with claim 1 or 2, wherein the spectral values have been quantized using a psycho-acoustic and/or psycho-optical model (82).

**12.** The apparatus in accordance with claim 11,
wherein the means (102) for generating a first and a second sub-scaling layer is implemented so as to use a constant certain order of bits in the bands.

**13.** The apparatus in accordance with claim 11 or 12,
wherein the certain order includes the least significant order of the bits of the quantized binary spectral values.

**14.** The apparatus in accordance with any of the preceding claims,
wherein a band comprises m spectral values,
with m is greater than or equal to 2, and
wherein the means (102) for generating the first and the second sub-scaling layer is implemented so as to calculate the first and second number of sub-scaling layers, such that they are at a maximum equal to m and at a minimum equal to 1, wherein, in the case in which m sub-scaling layers are present, each sub-scaling layer includes a bit of the certain order of exactly one spectral value, with one spectral value being present only in exactly one sub-scaling layer for the certain order.

**15.** The apparatus in accordance with claim 14, wherein m is equal to 4.

**16.** The apparatus in accordance with any of the preceding claims,
wherein the means (102) for generating the first and the second sub-scaling layer is implemented so as to carry out an arithmetical encoding of the first and/or second number of bits of the quantized spectral values of the certain order.

**17.** An apparatus for scalable decoding an encoded signal comprising a first and a second sub-scaling layer, with the first sub-scaling layer comprising bits of a certain order of a first number of binary spectral value in a band, with the second sub-scaling layer comprising bits of the certain order of a second number of binary spectral values in the band, and with the second number comprising at least one spectral value not contained in the first number, the apparatus comprising:

means (704) for extracting the first sub-scaling layer from the encoded signal and the second sub-scaling layer from the encoded signal; and
means for processing the first sub-scaling layer and the second sub-scaling layer so as to determine the bits of the certain order of the binary quantized spectral values in the band.

**18.** The apparatus in accordance with claim 17,
wherein the first number of the binary spectral values for the first sub-scaling layer is selected so as to achieve a maximum precision gain for a band,
wherein the means (704) for extracting is implemented so as to extract the first sub-scaling layer prior to the second sub-scaling layer.

**19.** A method for scalable encoding a spectrum of a signal including audio and/or video information, with the spectrum comprising binary spectral values, the method comprising the steps of:

generating (102) a first sub-scaling layer using bits of a certain order of a first number of binary spectral values in a band, with the first number being greater than or equal to 1 and less than a total number of the binary spectral values in the band, and for generating a second sub-scaling layer using bits of the certain order of a second number of binary spectral values, wherein the means (102) for generating is implemented so as to select the second number of the binary spectral values, such that it is greater than or equal to 1 and less than the total number of the binary spectral values in the band, and to determine the second number of the spectral values further such that it comprises at least one binary spectral value, which is not contained in the first number of binary spectral values; and
forming (106) an encoded signal, with the means for forming being implemented so as to include the first sub-scaling layer and the second sub-scaling layer into the encoded signal such that the first and the second sub-scaling layers (113a, 113b) are decodeable separately from each other.

20. A method for scalable decoding an encoded signal comprising a first and a second sub-scaling layer, with the first sub-scaling layer comprising bits of a certain order of a first number of binary spectral values in a band, with the second sub-scaling layer comprising bits of the certain order of a second number of binary spectral values in the band, and wherein the second number comprises at least one spectral value not contained in the first number, the method comprising the steps of:

extracting (704) the first sub-scaling layer from the encoded signal and the second sub-scaling layer from the encoded signal; and
processing the first sub-scaling layer and the second sub-scaling layer so as to determine the bits of the certain order of the binary quantized spectral values in the band.

21. Computer program having a program code for carrying out the method in accordance with claim 19 or claim 20, when the program runs on a computer.

## Revendications

1. Dispositif de codage échelonnable d'un spectre d'un signal comprenant des informations audio et/ou vidéo, le spectre présentant des valeurs spectrales binaires, aux caractéristiques suivantes:

un moyen (102) destiné à générer une première couche d'échelonnement partielle à l'aide de bits d'un ordre déterminé d'un premier nombre de valeurs spectrales binaires dans une bande, le premier nombre étant supérieur ou égal à 1 et inférieur à un nombre total de valeurs spectrales binaires dans la bande, et
à générer une deuxième couche d'échelonnement partielle à l'aide de bits de l'ordre déterminé d'un deuxième nombre de valeurs spectrales binaires, le moyen (102) destiné à générer étant réalisé pour sélectionner le deuxième nombre de valeurs spectrales binaires de sorte qu'il soit supérieur ou égal à 1 et inférieur au nombre total de valeurs spectrales binaires dans la bande, et pour déterminer le deuxième nombre de valeurs spectrales de sorte qu'il présente au moins une valeur spectrale binaire qui n'est pas contenue dans le premier nombre de valeurs spectrales binaires; et
un moyen (106) destiné à former un signal codé, le moyen destiné à former étant réalisé pour recevoir la première couche d'échelonnement partielle et la deuxième couche d'échelonnement partielle dans le signal codé de sorte que la première et la deuxième couche d'échelonnement partielle (113a, 113b) puissent être décodées séparément l'une de l'autre.

2. Dispositif selon la revendication 1, présentant par ailleurs les caractéristiques suivantes:

un moyen destiné à générer une couche d'échelonnement complète à l'aide de tous les bits d'un ordre qui est différent de l'ordre déterminé dans la bande, et
dans lequel le moyen destiné à former (106) est conçu par ailleurs pour recevoir la couche d'échelonnement complète dans le flux de bits de sorte qu'elle puisse être décodée indépendamment de la première et de la deuxième couche d'échelonnement partielle (113a 113b).

3. Dispositif selon la revendication 1 ou 2, dans lequel les valeurs spectrales binaires sont quantifiées, le dispositif présentant par ailleurs les caractéristiques suivantes:

un moyen (84) destiné à calculer des ordres de bits les plus significatifs d'un seuil de masquage psycho-acoustique pour les bandes; et
un moyen (604) destiné à définir les couches d'échelonnement des bits des valeurs spectrales binaires, une couche d'échelonnement présentant des bits des valeurs spectrales binaires dont les ordres se situent à une distance déterminée des ordres des bits les plus significatifs du seuil de masquage psycho-acoustique pour les bandes ou dont les ordres sont égaux aux ordres des bits les plus significatifs du seuil de masquage psycho-acoustique pour ces bandes.

4. Dispositif selon la revendication 3,
dans lequel le moyen (102) destiné à générer la première et la deuxième couche d'échelonnement partielle (113a, 113b) est conçu pour utiliser, comme bits de l'ordre déterminé, les bits des valeurs spectrales binaires dont la distance par rapport à l'ordre des bits les plus significatifs du seuil de masquage psycho-acoustique dans la bande est égale à "+1", "0" et/ou "-1".

5. Dispositif selon la revendication 3 ou 4,
dans lequel le moyen (84) destiné à calculer les ordres des bits les plus significatifs du seuil de masquage psycho-acoustique est réalisé pour déterminer, pour chaque valeur spectrale dans la bande, un ordre d'un bit le plus significatif, ou pour déterminer un ordre d'un bit le plus significatif du seuil de masquage psycho-acoustique pour l'ensemble de la bande.

6. Dispositif selon l'une des revendications 3 à 5, dans lequel le moyen (106) destiné à former est par ailleurs conçu pour recevoir des informations sur le seuil de masquage psycho-acoustique comme informations latérales (110) dans le signal codé.

7. Dispositif selon l'une des revendications précédentes,
dans lequel la première couche d'échelonnement partielle peut être décodée avant la deuxième couche d'échelonnement partielle, et
dans lequel le moyen (102) destiné à générer la première et deuxième partie couche d'échelonnement partielle est réalisé pour sélectionner, pour le premier nombre de valeurs spectrales binaires, le ou les valeurs spectrales par lequel ou lesquels peut être obtenu un gain de précision le plus grand pour la bande.

8. Dispositif selon l'une des revendications 1 à 7,
dans lequel la première couche d'échelonnement partielle peut être décodée avant la deuxième couche d'échelonnement partielle, et
dans lequel le moyen (102) destiné à générer la première et la deuxième couche d'échelonnement partielle est réalisé pour utiliser, pour la première couche d'échelonnement partielle, la valeur spectrale binaire qui, représentée par des bits dans les couches d'échelonnement supérieures, présente, dans la bande, la plus grande différence par rapport à un seuil de masquage psycho-acoustique pour la valeur spectrale.

9. Dispositif selon l'une des revendications précédentes,
dans lequel le moyen (102) destiné à générer la première et la deuxième couche d'échelonnement partielle est réalisé pour utiliser, pour la première couche d'échelonnement partielle, la valeur spectrale binaire qui, représentée par des bits dans les couches d'échelonnement supérieures, est dans la bande la valeur spectrale quantifiée la plus petite.

10. Dispositif selon l'une des revendications précédentes,
dans lequel les valeurs spectrales sont générées par une MDCT de nombre entier à partir de valeurs de balayage temporels du signal.

11. Dispositif selon la revendication 1 ou 2, dans lequel les valeurs spectrales sont quantifiées (82) à l'aide d'un modèle psycho-acoustique ou psycho-optique.

12. Dispositif selon la revendication 11,
dans lequel le moyen (102) destiné à générer la première et la deuxième couche d'échelonnement partielle est réalisé pour utiliser un ordre déterminé constant de bits dans les bandes.

13. Dispositif selon la revendication 11 ou 12,
dans lequel l'ordre déterminé est l'ordre le moins significatif des bits des valeurs spectrales binaires quantifiées.

14. Dispositif selon l'une des revendications précédentes,
dans lequel une bande présente m valeurs spectrales,
m étant supérieur ou égal à 2, et
dans lequel le moyen (102) destiné à générer la première et la deuxième couche d'échelonnement partielle est réalisé pour calculer le premier et le deuxième nombre de couches d'échelonnement partielles de sorte qu'ils soient tout au plus égaux à m et au moins égaux à 1, chaque couche d'échelonnement partielle comprenant, au cas où sont présentes m couches d'échelonnement partielles, un bit de l'ordre déterminé d'exactement une valeur spectrale, une valeur spectrale étant présente uniquement dans exactement une couche d'échelonnement partielle pour l'ordre déterminé.

**15.** Dispositif selon la revendication 14, dans lequel m est égal à 4.

**16.** Dispositif selon l'une des revendications précédentes, dans lequel le moyen (102) destiné à générer la première et la deuxième couche d'échelonnement partielle est réalisé pour effectuer un codage arithmétique du premier ou du deuxième nombre de bits des valeurs spectrales quantifiées de l'ordre déterminé.

**17.** Dispositif de décodage échelonnable d'un signal codé présentant une première et une deuxième couche d'échelonnement partielle, la première couche d'échelonnement partielle présentant des bits de l'ordre déterminé d'un premier nombre de valeurs spectrales binaires dans une bande, la deuxième couche d'échelonnement partielle présentant des bits de l'ordre déterminé d'un deuxième nombre de valeurs binaires spectrales dans la bande, et le deuxième nombre présentant au moins une valeur spectrale qui n.'est pas contenue dans le premier nombre, aux caractéristiques suivantes:

un moyen (704) destiné à extraire la première couche d'échelonnement partielle du signal codé et la deuxième couche d'échelonnement partielle du signal codé; et
un moyen destiné à traiter la première couche d'échelonnement partielle et la deuxième couche d'échelonnement partielle, pour déterminer les bits de l'ordre déterminé des valeurs spectrales quantifiées binaires dans la bande.

**18.** Dispositif selon la revendication 17, dans lequel le premier nombre de valeurs spectrales binaires est choisi pour la première couche d'échelonnement partielle de manière à obtenir un gain de précision le plus grand pour une bande, dans lequel le moyen (704) destiné à extraire est réalisé pour extraire la première couche d'échelonnement partielle avant la deuxième couche d'échelonnement partielle.

**19.** Procédé de codage échelonnable d'un spectre d'un signal comprenant des informations audio et/ou vidéo, le spectre présentant des valeurs spectrales binaires, aux étapes suivantes consistant à:

générer (102) une première couche d'échelonnement partielle à l'aide de bits d'ordre déterminé d'un premier nombre de valeurs spectrales binaires dans une bande, le premier nombre étant supérieur ou égal à 1 et inférieur à un nombre total de valeurs spectrales binaires dans la bande, et à générer une deuxième couche d'échelonnement partielle à l'aide de bits de l'ordre déterminé d'un deuxième nombre de valeurs spectrales binaires, le moyen (102) destiné à générer étant réalisé pour choisir le deuxième nombre de valeurs spectrales binaires de sorte qu'il soit supérieur ou égal à 1 et inférieur au nombre total de valeurs spectrales binaires dans la bande, et pour déterminer par ailleurs le deuxième nombre de valeurs spectrales de sorte qu'il présente au moins une valeur spectrale binaire qui n'est pas contenue dans le premier nombre de valeurs spectrales binaires; et
former (106) un signal codé, le moyen destiné à former étant réalisé pour recevoir la première couche d'échelonnement partielle et la deuxième couche d'échelonnement partielle dans le signal codé de sorte que la première et la deuxième couche d'échelonnement partielle (113a, 113b) puissent être décodées séparément l'une de l'autre.

**20.** Procédé de décodage échelonnable d'un signal codé présentant une première et une deuxième couche d'échelonnement partielle, la première couche d'échelonnement partielle présentant des bits de l'ordre déterminé d'un premier nombre de valeurs spectrales binaires dans une bande, la deuxième couche d'échelonnement partielle présentant des bits de l'ordre déterminé d'un deuxième nombre de valeurs spectrales binaires dans la bande, et le deuxième nombre présentant au moins une valeur spectrale qui n'est pas contenue dans le premier nombre, aux étapes suivantes consistant à:

extraire (704) la première couche d'échelonnement partielle du signal codé et la deuxième couche d'échelonnement partielle du signal codé; et
traiter la première couche d'échelonnement partielle et la deuxième couche d'échelonnement partielle, pour déterminer les bits de l'ordre déterminé des valeurs spectrales quantifiées binaires dans la bande.

**21.** Programme d'ordinateur avec un code de programme pour réaliser le procédé selon la revendication 19 ou la revendication 20 lorsque le programme est exécuté sur un ordinateur.

102

106

100

Band von
binären
Spektralwerten
des Audio-
und/oder
Videosignals

| Einrichtung zum<br>Erzeugen der<br>Teilskalierungs-<br>schichten | 1.TSS<br>104a<br>104b<br>2.TSS | Einrichtung zum<br>Bilden des<br>codierten<br>Signals |

108

codiertes
Signal

## FIG. 1a

5. Skalierungsschicht 115

3. Skalierungsschicht 113

112  111  110

| ... | 3.T.<br>Sk.-S. | 2.T.<br>Sk.-S. | 1.T.<br>Sk.-S. | 4Sk-<br>S. | 4.T.<br>Sk.-S. | 3.T.<br>Sk.-S. | 2.T.<br>Sk.-S. | 1.T.<br>Sk.-S. | 2.Sk.-<br>$S_0$ | 1.Sk.-<br>$S_1$ | Seiten-<br>informat. |

115c 115b 115a 114 113d 113c 113b 113a

## FIG. 1b  (skaliertes/codiertes Signal)

binäre Spektralwerte

1: höchstes Bit mit Wert 1
(pro Spektrallinie)
•: 0 oder 1
0: Null-Bit

MSB

+18 dB
+12 dB
+6 dB
0 dB (Mithörschwelle)
-6 dB
-12 dB

LSB

1 2 3 4 5 6    Frequenz

Band (m=5)

FIG. 2

Bitordnung

| | 1 | 2 | 3 | 4 | 5 | 6 |
|---|---|---|---|---|---|---|
| MSB | 0/0 | 0/0 | 0/0 | 0/0 | 1/0 | 0/0 |
| MSB - 1 | 1/0 | 0/0 | 0/0 | 0/0 | x/0 | 0/0 |
| MSB - 2 | x/0 | 0/0 | 0/0 | 0/0 | x/0 | 0/0 |
| MSB - 3 | x/1 | 0/0 | 0/0 | 0/0 | x/1 | 1/0 |
| LSB + 2 | x/x | 1/1 | 0/0 | 1/1 | x/x | x/1 |
| LSB + 1 | x/x | x/x | 1/1 | x/x | x/x | x/x |
| LSB | x/x | x/x | x/x | x/x | x/x | x/x |

1   2   3   4   5   6

Band

Frequenz

MSB der
Markierungsschwelle

FIG. 3

Amplitude
(log)
[dB]

Mithörschwelle $\hat{=}$
Erlaubter Fehler

Bitschicht (6dB)

Frequenz

FIG. 4

Amplitude
[dB]

Mithörschwelle
(in 1,5 dB-Schritten)

Bitschicht (6dB)

Frequenz

o : Erreichte Genauigkeit

FIG. 5

602          604          102

Zeitsignal

```
┌──────────┐     ┌──────────────┐     ┌──────────────┐
│          │     │              │     │ Erzeugen von │
│  z.B.    │ ──▶ │ Definieren   │ ──▶ │  Teilsk.-s/  │
│ Int MDCT │     │ von Skalier- │     │  Skal.schi.  │
│          │     │ ungsschichten│     │              │
└──────────┘     └──────────────┘     └──────────────┘
```

600

```
        ┌──────────────┐
        │  psycho-     │
        │  akustisches │
        │  Modell      │
        └──────────────┘
```

MSB der
Mask.schwelle
pro SW/Band

84

606

```
┌──────────────┐
│   arithm.    │
│ Codierung der│
│Teilsk.-schichten│
└──────────────┘
```

608

```
┌──────────────┐
│  Bitstrom-   │
│  bildung     │
└──────────────┘
```

skaliertes/
codiertes
Signal

## Fig. 6 (Codierer)

702

Anzahl
der Skalierungs-/
Teilskalierungsschichten

700                                 708

```
          ┌──────────┐     ┌──────────────┐     ┌──────────┐
          │ Bitstrom-│     │ Skalierungs- │     │          │
      ──▶ │ deforma- │ ──▶ │ schichten-   │ ──▶ │ Int MDCT⁻¹│ ──▶
          │ tierung  │     │ Extraktion/  │     │          │
          │          │     │ Dekodierung  │     │          │
          └──────────┘     └──────────────┘     └──────────┘
```

skaliertes,                                  de-
codiertes                                 codiertes
Signal           704                706       Signal

## Fig. 7 (Decodierer)

Fig. 8 (Stand der Technik)

Fig. 9 (Stand der Technik)

402                                              408

zeitdiskr. ○— | Fenstern mit | —2N→ | MDCT | → N Spektralwerte
                | Fensterlänge 2N |   gefenst. |      |   (1. Fenster)
AW               |                |    AW    |      |        —○

                    406

                | 50 %  |
                | Overlap |

                    404                          410

                | Fenstern | —2N→ | MDCT | → N Spektralwerte
                | Länge 2N |  gefenst. |      |   (2. Fenster)
                |         |   AW    |      |        ○

## FIG. 10a

412

N SW ○→ | MDCT⁻¹ | —2 N AW 1. Fenster—○
1. Fenster |       |

                                    416

                        | TDAC |        N AW
                        | Y₁ (N+k) + Y₂(k) |   —○

414

N SW ○→ | MDCT⁻¹ | —2 N AW
1. Fenster |       |   2. Fenster

## FIG. 10b

FIG. 11

FIG. 12

EP 1 502 255 B1

FIG. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19742201 C1

**In der Beschreibung aufgeführte Nicht-Patentliteratur**

- Multi-Layer Bit Sliced Bit Rate Scalable Audio Coder. *AES-Convention, Preprint Nr. 4520,* 1997, 103
- A scalable subband audio coding scheme for ATM environments. **W. JIN U.A.** Proceedings IEEE Southeastcon 2001, Engineering The Future, Clemson, SC. IEEE, 30. Marz 2001
- Audio Coding Based on Integer Transforms. *AES-Versammlung, New York,* 2001
- Coding of Audio-Visual Objects: Audio. International Standard. 2001, vol. 144, 96-3
- Uniform Midrise Quantizer. **N.S. JAYANT ; P. NOLL.** Digital coding of waveforms. Prentice-Hall, 1984
- Audio Coding Based on Integer Transforms. *111-te AES-Versammlung, New York,* 2001
- **INGRID DAUBECHIES ; WIM SWELDENS.** Factoring Wavelet Transforms Into Lifting Steps. Preprint, Bell Laboratories, Lucent Technologies, 1996
- **P. P. VAIDYANATHAN.** Multirate Systems And Filter Banks. Prentice Hall, 1993
- **H. S. MALVAR.** Signal Processing With Lapped Transforms. Artech House, 1992
- **J. HERRE ; J. D. JOHNSTON.** Enhancing the Performance of Perceptual Audio Coders by Using Temporal Noise Shaping (TNS). *AES Convention, Los Angeles,* 1996, 101